# FASCICULE DE BREVET EUROPEEN

(11) **EP 1 169 425 B1**
(45) Date de publication et mention de la délivrance du brevet: **22.12.2004**
(21) Numéro de dépôt: 00918954.9
(22) Date de dépôt: 12.04.2000
(51) Int. Cl.: C11D 3/50, A01N 25/26, A61K 7/46

(54) **SYSTEME MULTI-PARTICULAIRE VECTEUR DE MATIERE(S) ACTIVE(S), SA PREPARATION ET SES UTILISATIONS**
MULTIPARTIKULARES SYSTEM VEKTOR VON WIRKSTOFFEN, IHRE HERSTELLUNG UND VERWENDUNGEN
ACTIVE-SUBSTANCE VECTOR MULTIPARTICULATE SYSTEM, PRODUCTION AND USE THEREOF

(30) Priorité: 12.04.1999 FR 9904526
(43) Date de publication de la demande: 09.01.2002
(73) Titulaire: RHODIA CHIMIE, 92512 Boulogne Billancourt Cedex (FR); Bayer CropScience S.A., 69009 Lyon (FR)
(72) Inventeur: PRUD'HOMME, Christian, F-69006 Lyon (FR); FLEURY, Etienne, F-69540 Irigny (FR); MICHALON, Jean-Paul, F-69008 Lyon (FR); ZERROUK, Robert, 06330 Roquefort les Bains (FR)
(74) Mandataire: Fabre, Madeleine-France
(86) Numéro de dépôt international: PCT/FR2000/000940
(87) Numéro de publication internationale: WO 2000/061714

(56) Documents cités:
- EP-A- 0 290 984
- EP-A- 0 397 245
- WO-A-94/19448
- FR-A- 2 546 903
- FR-A- 2 702 929
- PATENT ABSTRACTS OF JAPAN vol. 11, no. 141 (C-421), 8 mai 1987 (1987-05-08) & JP 61 282301 A (OTSUKA CHEM CO LTD), 12 décembre 1986 (1986-12-12) & DATABASE WPI Week 198704 Derwent Publications Ltd., London, GB; AN 25773

## Description

La présente invention a pour objet un système multi-particulaire vecteur de matière(s) active(s), son procédé de préparation et ses utilisations.

L'invention vise plus particulièrement un système dans lequel la matière active est un parfum et qui, grâce à sa forme solide, peut être mis en oeuvre comme additif parfumant notamment dans les compositions détergentes.

L'invention concerne également la formulation de matière(s) active(s) du domaine phytosanitaire.

Des matières actives, au sein de formulations, peuvent poser des problèmes de stabilité ou d'agressivité vis-à-vis des autres additifs de la formulation dans laquelle ils sont contenus. Il en est par exemple ainsi des parfums, des enzymes, des matières actives phytosanitaires, notamment au sein de compositions détergentes.
De même certaines matières actives peuvent présenter des problèmes de manipulation (formation de poussières, coulabilité difficile).
Dans le domaine phytosanitaire, en particulier en agrochimie, les conditions climatiques et édaphiques peuvent avoir une influence sur l'efficacité et/ou la persistance d'action des matières actives. Par exemple, certaines matières actives peuvent être rapidement dégradées par un excès de soleil, ou subir une lixiviation sous l'effet des précipitations, la pluie notamment.

Le parfumage des compositions détergentes de lavage, notamment de lavage du linge, requiert un certain nombre de contraintes.

Un des premiers problèmes posés est de trouver un mode d'addition et de répartition adéquate du parfum, lorsque celui-ci est liquide, sur la poudre détergente.
Généralement le parfum est pulvérisé finement, en continu, sur la poudre formulée, complète, qui transite dans un transporteur quelconque, entre le lieu de fabrication et le lieu de conditionnement. Le parfum étant un des composants les plus onéreux de la formulation lessivielle, il est nécessaire que le mode de mélange du parfum à la poudre permette un minimum de perte du parfum. Le respect du dosage (% de parfum par rapport à la poudre ) est un des éléments difficiles à maîtriser et qu'il faut chercher à améliorer aussi bien pour des problèmes de coût que pour des problèmes de constance de qualité.
La mise en forme solide-particulaire de la composition parfumante peut représenter une première amélioration à ce niveau du procédé de fabrication des lessives.

Un autre problème du parfumage des lessives est celui de la stabilité du parfum (et de l'ensemble des "notes" qu'il libère) au cours du stockage de la lessive dans son emballage.
En effet, il a été constaté que lors de leur stockage, les lessives en poudre pour lave-linge notamment, perdent de 20 à 90 % du parfum introduit, ce qui nécessite l'introduction au départ de quantités très élevées de parfum pour conserver une senteur suffisante au moment de l'utilisation du produit.
Les composants des lessives sont en effet très variés et de natures chimiques très différentes ; ils peuvent être agressifs, voire incompatibles avec la composition parfumante qui renferme des composants chimiquement fragiles.
Les lessives modernes contiennent souvent des systèmes de blanchiment basés sur des produits libérant de l'eau oxygénée, puis de l'oxygène actif. C'est là l'élément le plus déstabilisant pour les parfums.
D'autres facteurs de dégradation des parfums, sont l'alcalinité des compositions détergentes, l'eau de cristallisation, l'eau libre, les tensio-actifs, les séquestrants, qui sont toujours présents dans les compositions détergentes et peuvent interférer négativement avec les parfums.

Par ailleurs, dans le domaine agrochimique, les recherches de nouvelles techniques de formulation sont dirigées vers des formulations capables de protéger les matières actives contre les conditions climatiques et édaphiques, tout en maintenant et/ou augmentant l'efficacité des dites matières actives.

La Demanderesse a trouvé un système vecteur de matière(s) actives(s), qui se trouve sous forme solide et donc de manipulation aisée (coulabilité), susceptible de ne libérer ladite matière active que lors de son application en milieu aqueux.

Dans un mode de réalisation préférée de l'invention, la Demanderesse a trouvé notamment un système parfumant pour le lavage du linge, se présentant sous forme solide et permettant de ne libérer le parfum qu'essentiellement pendant le lavage du linge.

Il a été proposé dans EP 290984 de mettre en forme des particules solides (poudres d'oxydes métalliques), par mise en présence dans une phase liquide, des particules solides, d'un liant polymère soluble comprenant des unités anioniques carboxyliques ou sulfoniques susceptibles de former des sels insolubles avec des cations métalliques polyvalents, et d'une solution d'un cation métallique polyvalent. Les liants polymères sont des polymères naturels comme des polysaccharides carboxylés ou des polymères synthétiques dérivés d'acide mono ou polycarboxylique oléfiniquement insaturé.

Ainsi, un premier objet de l'invention consiste en un système multi-particulaire vecteur de matière(s) active(s) comprenant au moins une matière active incluse dans une matrice organique hydrophile (MO) comprenant au moins un polymère anionique hydrosoluble et/ou hydrodispersable (K) insolubilisé par un cation métallique, caractérisé en ce que ledit polymère anionique hydrosoluble et/ou hydrodispersable (K) est choisi parmi les copolyesters anioniques sulfonés hydrosolubles ou hydrodispersables, susceptibles d'être obtenus par (trans)estérification et polycondensation d'une composition monomère (M) comprenant:
- au moins un monomère dicarboxylique non sulfoné (MDC), ledit monomère étant aromatique, aliphatique ou cycloaliphatique, exempt de fonction sulfo, et présentant deux fonctions carboxy réactives,
- au moins un monomère sulfoné (MS) polyfonctionnel (MSPF) et/ou monofonctionnel (MSMF), ledit monomère étant aromatique, aliphatique ou cycloaliphatique et présentant au moins une fonction sulfo liée directement ou indirectement à un atome de carbone d'un reste aromatique, aliphatique ou cycloaliphatique et deux fonctions réactives semblables ou différentes, choisies parmi les fonctions carboxy, hydroxy et amino, ou une fonction réactive choisie parmi les fonctions carboxy et hydroxy,
- au moins un monomère non sulfoné (MPF) polyfonctionnel, ledit monomère étant aromatique, aliphatique ou cycloaliphatique, exempt de fonction sulfo et présentant au moins deux fonctions réactives semblables ou différentes, choisies parmi les fonctions hydroxy,
- éventuellement au moins un monomère monocarboxylique non sulfoné polyfonctionnel (MMC), ledit monomère étant aromatique, aliphatique ou cycloaliphatique, exempt de fonction sulfo et présentant une fonction carboxy réactive et une fonction réactive hydroxy,
- et éventuellement au moins un monomère monofonctionnel non sulfoné (MMF) présentant une fonction réactive carboxy ou hydroxy.

Dans un mode de réalisation préférée, l'invention consiste en un système multi-particulaire (SP) dans lequel la matière active est un parfum.

Une autre variante préférée de l'invention réside dans un système multi-particulaire dans lequel la matière active est une matière active du domaine phytosanitaire.

Un autre objet de l'invention est le procédé d'obtention dudit système multi-articulaire vecteur de matière(s) active (s) qui consiste à introduire la ou les matières actives dans une dispersion aqueuse comprenant au moins un polymère anionique hydrosoluble et/ou hydrodispersable qui est mise en forme et à insolubiliser le polymère anionique par mise en présence d'un cation métallique conduisant à des particules de matrice polymérique incluant la ou les matières actives.

Conformément au procédé de l'invention, la mise en forme est avantageusement effectuée selon une technique de fragmentation en gouttelettes.

Un premier mode de réalisation de cette dernière est de mettre en oeuvre une technique d'émulsification.

Une autre mise en forme susceptible de convenir est la technique de prilling.

Un autre mode d'exécution du système multi-particulaire de l'invention consiste à mettre en forme le système, sans passer par une technique de fragmentation en gouttelettes, mais par précipitation directe du polymère.

D'autres objets de l'invention résident dans l'application des particules de parfum, en particulier dans le domaine de la détergence, et de composés pesticides dans le domaine de l'agrochimie.

Intervient dans le système (S) de l'invention, une matière active qui peut se présenter sous différentes formes physiques.

Elle peut être sous forme moléculaire et ainsi être solubilisée tout ou partie dans la matrice organique

Elle peut être à l'état liquide et se présenter sous forme de fines gouttelettes.

Il est également possible que la ou les matières actives soient solubilisées dans un solvant.

Par la suite, on entendra par matière active, soit une matière active telle quelle ou dans un solvant, soit un mélange de matières actives telles quelles ou dans un solvant.

La matière active peut être également sous forme solide et être alors à l'état particulaire.

Lesdites particules de matière active (MA) peuvent présenter une granulométrie moyenne de l'ordre de 0,1 à 500 µm, de préférence de l'ordre de 0,1 à 50 µm, tout particulièrement de 0,2 à 10 µm.

On entend par "matière active sous forme solide", aussi bien une matière active en tant que telle solide à température ambiante qu'une matière active liquide mise sous forme solide par absorption sur un support solide.

Pour ce qui est du support solide d'une matière active liquide susceptible d'être utilisé, on fait appel à tout matériau adsorbant et/ou de préférence absorbant, de préférence minéral, inerte ou essentiellement inerte vis-à-vis des composés odorants constituant la matière active et inerte vis-à-vis de la matrice polymérique.
A titre d'exemples, on peut citer des matériaux adsorbants et/ou absorbants minéraux comme la silice (précipitée notamment), les argiles (sépiolite, bentonites, montmorillonite), les zéolithes de type X et Y notamment.
Ces matériaux, sous forme particulaire, peuvent présenter une dimension pouvant varier largement par exemple de 0,1 à 500 µm environ, de préférence de l'ordre de 0,1 à 50 µm, tout particulièrement de 0,2 à 10 µm.

D'une manière préférentielle, l'invention vise un système vecteur de matière(s) active(s), dans lequel la matière active est un liquide. En effet, le procédé de l'invention permet de piéger un liquide sans qu'il soit nécessaire de le déposer sur un support solide. Ainsi, l'invention convient tout à fait bien pour la mise en forme des parfums sous forme liquide conduisant à un système parfumant (SP) solide.

L'invention inclut également le cas où l'on se trouve en présence d'un mélange de ces états physiques.

Toutes les matières actives, qu'elles soient solides, liquides (telles quelles ou en solution dans un solvant) conviennent à l'invention.

Toutefois, il est préférable qu'elles ne soient pas miscibles ou ne soient que très faiblement miscibles à l'eau.

Par faiblement miscible, on entend des matières actives dont la solubilité dans l'eau à pH 7 ne dépasse pas 20 % en poids, de préférence, 10 % en poids.

L'invention convient pour la formulation de nombreuses matières actives. Des exemples de matières actives et de domaines d'application illustrent le champ d'application de la présente invention mais ils ne présentent aucun caractère limitatif.

A titre d'exemple de matières actives utilisées dans le domaine de l'alimentaire, on peut citer les mono-, di- et triglycérides, les huiles essentielles, les arômes, les colorants.

A titre d'exemple de matières actives utilisées dans le domaine des peintures, on peut citer les résines alkydes, les résines époxy, les isocyanates bloqués ou non.

Dans le domaine du papier, on peut citer à titre d'exemple les résines de collage et d'hydrofugation telles que le dimère d'alkylcétène (AKD) ou l'anhydride alcényle succinique (ASA).

Dans le domaine du bâtiment, on peut citer des produits d'hydrofugation, comme les organopolysiloxanes linéaires, cycliques et/ou ramifiés pouvant comporter dans la chaîne et/ou en extrémité de chaîne des fonctions réactives hydroxy, alcoxy ...

Il est de même possible d'utiliser des matières actives telles que les lubrifiants pour le travail ou la déformation des matériaux.

Lorsque la matière active est un solvant (ou un mélange de solvants) ou une solution dans un solvant (ou plusieurs solvants), ledit solvant n'est pas ou n'est que peu miscible dans l'eau au sens indiqué précédemment. A titre d'exemples, on peut citer les solvants mis en oeuvre pour le nettoyage ou le décapage, tels que les coupes pétrolières aromatiques, les composés terpéniques comme le D-limonène, ou encore le L-limonène, ainsi que les solvants comme le Solvesso, les esters aliphatiques, comme les esters méthyliques d'un mélange d'acides acétique, succinique et glutarique (mélange d'acides sous-produits de la synthèse du Nylon), les huiles paraffiniques comme l'huile de vaseline, les alcanes, les solvants chlorés, les triglycérides de synthèse ou naturels.

A titre d'exemple de matières actives utilisées dans le domaine de la cosmétique on peut citer les huiles silicones appartenant par exemple à la famille des diméthicones.

Un domaine d'application privilégié de l'invention est le domaine des matières actives phytosanitaires. On peut mentionner entre autres les pesticides, et par exemple les fongicides, herbicides, insecticides, acaricides, ou encore les régulateurs de croissance des végétaux.

A titre d'exemples de matières actives (MA) on peut mentionner les matières actives hydrophobes de détergence, comme par exemple les catalyseurs de blanchiment, les agents biocides, les activateurs de blanchiment, les agents anti-UV, les azurants optiques, les agents anti-oxydants, les agents anti-mousse.

Comme exemples d'agents biocides, on peut citer les bactéricides (triclosan...), les fongicides.

Comme exemples d'activateurs de blanchiment, on peut mentionner ceux engendrant dans le milieu lessiviel un peroxyacide carboxylique, comme la tétraacétytéthylènediamine, la tétraacétyl méthylènediamine ....

Comme exemple d'azurants optiques, on peut mentionner les dérivés du stilbène, depyrazoline, coumarine, acide fumarique, acide cinnamique, azoles, méthinecyanines, thiophènes

Comme exemple d'agent anti-UV ou d'agent antioxydant, on peut citer la vanilline et ses dérivés.

Comme exemples de catalyseurs de blanchiment, on peut citer les dérivés du manganèse ou autres métaux, tels que ceux décrits dans US-A-5 246 621, US-A-5 244 594, US-A-5 194 416, US-A- 5 114 606, EP-A-549 271, EP-A-549 272, EP-A-544 440, EP-A-544 490, US-A-4 430 243, US-A-5 114 611, US-A-4 728 455, US-A-5 284 944, US-A-5 246 612 ...

Dans le domaine de la détergence, on peut mentionner en tant que matière active possible les antimousses silicones.

La présente invention vise tout particulièrement un système (S), dans lequel la matière active est un parfum ; ledit système est nommé " système parfumant (SP) ".

On entend par "parfum", soit une essence parfumée, soit plus généralement une composition complexe obtenue à l'aide d'un mélange de nombreux produits odorants et de produits excipients qui en assurent l'homogénéité.
Ledit mélange contient généralement au moins 25 % d'au moins un composé odorant du groupe des cétones aliphatiques ou aromatiques, des aldéhydes aliphatiques ou aromatiques, des produits de condensation des aldéhydes et des amines, des lactones aromatiques ou aliphatiques, des éthers ou esters aromatiques ou aliphatiques, des alcools aliphatiques, des hydrocarbures saturés ou insaturés linéaires, cycliques ou aromatiques, terpéniques, polynucléaires ou non ...

On entend par "parfum sous forme solide", aussi bien un parfum en tant que tel solide à température ambiante (comme la vanilline et ses dérivés), qu'un parfum liquide mis sous forme solide par absorption sur un support solide.

Pour ce qui est du support solide d'un parfum liquide susceptible d'être utilisé, on fait appel à tout matériau adsorbant et/ou de préférence absorbant, de préférence minéral, inerte ou essentiellement inerte vis-à-vis des composés odorants constituant le parfum et inerte vis-à-vis du polymère anionique et l'on peut se référer aux matériaux précités.

D'une manière préférentielle, l'invention vise un système parfumant, dans lequel le parfum est un liquide. En effet, le procédé de l'invention permet de piéger un liquide sans qu'il soit nécessaire de le déposer sur un support solide.

On peut citer à titre d'exemples de composés odorants entrant dans la composition des parfums :
- l'aldéhyde hexylcinnamique,
- le 2-méthyl-3-(p-tert-butylphényl)-propionaldéhyde,
- le 7-acétyl-1,2,3,4,5,6,7,8-octahydro-1,1,6,7-tétraméthylnaphtalène,
- le salicylate de benzyle,
- la 7-acétyl-1,1,3,4,4,6-hexaméthyltétraline,
- l'acétate de p-tert-butylcyclohexyle,
- le méthyl dihydro jasmonate,
- le β-naphtol méthyl éther,
- la méthyl-β-naphtylcétone,
- le 2-méthyl-2-(p-isopropylphényl)-propionaldéhyde,
- le 1,3,4,6,7,8-hexahydro-4,6,6,7,8,8-hexaméthyl-cyclopenta-2-benzopyrane,
- le dodécahydro-3a,6,6,9a-tétraméthylnaphto(2,1b]bifurane,
- l'anisaldéhyde,
- la coumarine,
- le cédrol,
- la vanilline,
- l'éthylvanilline,
- l'héliotropine,
- le brassylate d'éthylène,
- l'isobornylcyciohexanol,
- le cyclopentadécanolide,
- l'acétate d'isoamyle,
- l'acétate de tricyclodécényle,
- le propionate de tricyclodécényle,
- l'alcool β-phényléthylique,
- le terpinéol,
- le linalool,
- l'acétate de linalyle,
- le géraniol,
- le nérol,
- l'acétate de 2-(1,1-diméthyléthyl)cyclohexanol,
- l'acétate de benzyle,
- les terpènes (orange),
- l'eugénol,
- le phtalate de diéthyle,
- les huiles essentielles, résines ou résinoïdes (huile d'orange, citron, patchouli, beaume du Pérou, Olibanum résinoïde, styrax, coriandre, lavandin, lavande).

Bien que le parfum constitue une matière active de choix selon l'invention, il est possible d'obtenir des systèmes (S) de toutes sortes.

La quantité de matière(s) active(s) présente dans le système vecteur de matière(s) active (s) de l'invention est fonction de la nature et de la quantité de matière active désirée dans ledit système.

Lorsque la matière active est sous forme liquide, cette quantité peut représenter de l'ordre de 5 à 60 % en poids de matière(s) active(s), de préférence, de 15 à 40 % du poids total du système vecteur de matière(s) active (s) de l'invention.

Pour ce qui est de la quantité de matrice polymérique comprenant au moins le polymère (K) qui intervient dans le système de l'invention, représente de 40 à 95 %, de préférence de 60 à 85 %, en poids de l'ensemble matière(s) active(s) et matrice polymérique.

Lorsque la matière active est sous forme solide, cette quantité peut représenter de l'ordre de 0,5 à 80 % en poids de matière(s) active(s), de préférence, de 10 à 60 % du poids total du système vecteur de matière(s) active (s) de l'invention.

Dans ce cas, la quantité de matrice polymérique comprenant au moins le polymère (K) qui intervient dans le système de l'invention, représente de 20 à 99,5 %, de préférence de 40 à 90 %, en poids de l'ensemble matière(s) active(s) et matrice polymérique.

Selon l'invention, le système (S) se présente sous forme de particules dont la taille est fonction de l'application recherchée. Il est à noter que le mode de mise en forme détermine la taille des particules obtenues.

On précisera, à titre illustratif, que la taille des particules varie généralement entre 0,2 et 500 µm environ, de préférence de l'ordre de 0,2 et 100 µm et tout particulièrement entre 0,3 et 10 µm lors de la mise en oeuvre de la technique d'émulsification.

Lorsqu'il s'agit de la technique de prilling, la taille des particules obtenues est généralement plus grosse, de l'ordre de 100 à 1000 µm, de préférence de l'ordre de 200 µm à 500 µm.

Pour ce qui est de la matrice polymérique, elle est constituée par au moins un polymère anionique et plus préférentiellement un copolymère anionique.

Par "polymère ou copolymère anionique", on entend un polymère comprenant des groupes fonctionnels anioniques tels que des groupes carboxyliques et/ou sulfoniques.

Sont utilisés, dans ce qui suit, les termes "polyfonctionnel" et "monofonctionnel" qui signifient :
- monomère "polyfonctionnel", un monomère présentant au moins deux fonctions réactives semblables ou différentes, choisies parmi les fonctions carboxy et hydroxy, susceptibles de réagir par (trans)estérification et polycondensation
- monomère "monofonctionnel", un monomère présentant une seule fonction réactive choisie parmi les fonctions carboxy et hydroxy, susceptibles de réagir par (trans)estérification et polycondensation

Les polymères convenant sont les copolymères hydrosolubles et/ou hydrodispersables choisis parmi les copolyesters anioniques sulfonés, les copolyesteramides anioniques sulfonés et les copolyamides anioniques sulfonés, hydrosolubles et/ou hydrodispersables de masse moléculaire en poids d'au moins 4 000, de préférence compris entre 10 000 et 60 000.

Les masses moléculaires précitées font référence à une masse moléculaire en poids mesurée par chromatographie par perméation de gel comme précisé ci-après.

Les polymères ayant une faible masse moléculaire inférieure ou égale à 20 000 sont appelés généralement oligomères.

Dans le présent texte, dans un but de simplification, l'expression "polymère" recouvre aussi bien les copolymères de masse moléculaire plus élevée que les oligomères.

L'invention inclut également des mélanges de copolymères et d'oligomères.

Lesdits copolyesters anioniques sulfonés (K) comprennent un taux de motifs sulfonés correspondant à une teneur pondérale en soufre pouvant être de l'ordre de 0,5% à 8%, de préférence de l'ordre de 1,2 à 6% par rapport audit copolymère (K).

Dans la définition des motifs ci-dessus, le terme "sulfoné" signifie la présence d'au moins une fonction sulfo SO₃M liée à un atome de carbone d'un groupe hydrocarboné ; à contrario, le terme "non sulfoné" signifie l'absence d'une telle fonction.

Lesdits copolymères (K) pouvant constituer la matrice sont susceptibles d'être obtenus par (trans)estérification et polycondensation d'une composition monomère (M) comprenant :
- au moins un monomère non sulfoné (MDC), ledit monomère étant aromatique, aliphatique ou cycloaliphatique, exempt de fonction sulfo, et présentant deux fonctions carboxy réactives,
- au moins un monomère sulfoné (MS) polyfonctionnel (MSPF) et/ou monofonctionnel (MSMF), ledit monomère étant aromatique, aliphatique ou cycloaliphatique et présentant au moins une fonction sulfo liée directement ou indirectement à un atome de carbone d'un reste aromatique, aliphatique ou cycloaliphatique et deux fonctions réactives semblables ou différentes, choisies parmi les fonctions carboxy, hydroxy et amino, ou une fonction réactive choisie parmi les fonctions carboxy et hydroxy,
- au moins un monomère non sulfoné (MPF), ledit monomère étant aromatique, aliphatique ou cycloaliphatique, exempt de fonction sulfo et présentant au moins deux fonctions réactives hydroxy,
- et éventuellement au moins un monomère non sulfoné (MMC), ledit monomère étant aromatique, aliphatique ou cycloaliphatique, exempt de fonction sulfo et présentant une fonction carboxy réactive et une fonction réactive hydroxy,
- et éventuellement au moins un monomère monofonctionnel non sulfoné (MMF) présentant une fonction réactive carboxy ou hydroxy.

Parmi les monomères non sulfonés (MDC) présentant deux fonctions carboxy réactives, on peut mentionner :
- les acides dicarboxyliques aromatiques dont le reste aromatique est éventuellement substitué par au moins un groupe alkyle contenant de 1 à 4 atomes de carbone un groupe hydroxy, tels que les acides phtalique, téréphtalique, isophtalique, orthophtalique, les acides anthracène-, 1,8-naphtalène-, 1,4-naphtalène-, biphényldicarboxyliques, les acides 5-hydroxyisophtalique, 4-hydroxyisophtalique, 4-hydroxyphtalique,
- les acides dicarboxyliques aliphatiques ou cycloaliphatiques dont le reste aliphatique ou cycloaliphatique contient de 4 à 10 atomes de carbone, tels que les acides adipique, glutarique, succinique, triméthyladipique, pimélique, azélaique, sébacique, subérique, itaconique, maléique, fumarique, les acides cyclopentanedicarboxyliques, cyclohexanedicarboxyliques, les acides 2-hydroxyméthylsuccinique, hydroxyméthylglutarique, hydroxyglutarique,
sous forme acide, anhydride, chlorure d'acide ou diester inférieur (de méthyle, éthyle, propyle, isopropyle, butyle, méthyle de préférence).

Dans les monomères sulfonés polyfonctionnels (MSPF) présentant deux fonctions réactives semblables ou différentes, choisies parmi les fonctions carboxy et hydroxy, le groupe sulfoné peut être lié à un atome de carbone d'un radical arylène, ledit radical arylène pouvant être un radical phénylène ou un radical bivalent constitué d'une combinaison de plusieurs noyaux benzéniques ortho- ou péri- condensés ou liés entre eux par des groupes inertes, tels que lien valentiel simple, radical alkylène, groupe oxy, groupe oxo, groupe sulfonyle.

Comme exemples de combinaison de noyaux benzéniques, on peut citer les noyaux naphtalène, diphényle, oxydiphényle, sulfonyldiphényle, méthylènediphényle.
Ledit groupe sulfoné peut également être lié à un atome de carbone d'un radical alkylène soit directement soit indirectement par l'intermédiaire d'un groupe alkylène, alcoxyalkylène, oxyalkylène, arylène, alkylarylène, alcoxyarylène.
Ledit groupe sulfo peut être sous forme acide -SO₃H ou un sel SO₃M⁺ dont le cation peut être un métal alcalin (sodium, lithium, potassium) ou un cation ammonium.

Comme exemples de monomères sulfonés polyfonctionnels (MSPF), on peut mentionner :
- ceux présentant deux fonctions réactives carbonyle comme :
   . les acides dicarboxyliques aromatiques, dont le reste aromatique est éventuellement substitué par au moins un radical substituant hydroxy, tels que les acides sulfophtaliques, sulfotéréphtaliques, sulfoisophtaliques, sulfoorthophtaliques, 4-sulfonaphtalène-2,7-dicarboxylique, 5-(4-sulfophényl)-isophtalique, 5-(2-sulfophényl)-isophtalique, 5-(4-sulfophénoxy)-isophtalique, les sulfo-bis(hydroxycarbonyle)-4,4'-diphénylsulfones, les acides sulfodiphényl-dicarboxyliques, les sulfophényldicarboxybenzènesulfonates, les sulfo-bis(hydroxycarbonyle)-4,4'-diphénylméthanes, les acides sulfo-phénoxy-5 isophtaliques et d'une manière plus générale ceux décrits dans US-A-3,734,874,
   . les acides dicarboxyliques aliphatiques dont le reste aliphatique contient de 4 à 10 atomes de carbone et est éventuellement substitué par un radical aryle, phényle notamment, tels que les acides sulfosuccinique, 3-sulfoglutarique, 3-(4-sulfophényl)glutarique ...
   sous forme acide, anhydride, chlorure d'acide ou diester inférieur (de méthyle, éthyle, propyle, isopropyle, butyle, méthyle de préférence),
- ceux présentant deux fonctions hydroxyle réactives comme les diols sulfoaliphatiques dont le reste aliphatique contient de 2 à 10 atomes de carbone, tels que les acides 2,3-dihydroxypropanesulfonique, 1,5-dihydroxypentane-3-sulfonique, les diols aliphatiques contenant de 2 à 3 atomes de carbone substitués par des groupes poly(oxyéthylène) sulfoniques ou poly(oxyéthylène) phénol sulfoniques, comme les 1,2-propane diols poly(oxyéthylène) sulfoniques et 1,2-propane diols poly(oxyéthylène) phénol sulfoniques
- ceux présentant une fonction hydroxy et une fonction carboxy réactives comme les hydroxyacides aliphatiques dont le reste aliphatique contient de 2 à 10 atomes de carbone, tels que les acides 3-hydroxysulfopropionique, 5-hydroxy-3-sulfopentanoïque
sous forme acide, chlorure d'acides ou esters inférieurs (de méthyle, éthyle, propyle, isopropyle, butyle, méthyle de préférence).

Les monomères sulfonés (MS) préférentiels sont les acides sulfoisophtaliques et sulfo-succiniques ou leurs diesters, et tout particulièrement le sodiooxysulfonyl-5 isophtalate de diméthyle.

Comme exemples de monomères sulfonés monofonctionnels (MSMF), ne présentant qu'une seule fonction réactive hydroxy ou carboxy, on peut mentionner
- les monoacides carboxyliques aromatiques sulfonés, comme l'acide sulfobenzoïque, sous forme acide, chlorure d'acide ou ester inférieur (de méthyle, éthyle, propyle, isopropyle, butyle, méthyle de préférence),
- les alcanesulfonates polyoxyalkylénés, comme les éthanesulfonates, contenant de 2 à 4 motifs oxyéthylène,
- les phénolsulfonates polyoxyalkylénés, comme les phénolsulfonates polyoxyéthylénés et/ou polyoxypropylénés, contenant jusqu'à 20 motifs oxyéthylène.

Comme exemples de monomères non sulfonés (MPF) présentant au moins deux fonctions réactives semblables ou différentes, choisies parmi les fonctions hydroxy et amino, on peut mentionner :
- les diols ou triols contenant de 2 à 20 atomes de carbone comme :
   . l'éthylèneglycol et ses homologues supérieurs pouvant contenir jusqu'à 20 motifs oxyéthylène, en particulier l'éthylèneglycol, le diéthylèneglycol et le triéthylèneglycol,
   . les alkylèneglycols linéaires ou ramifiés pouvant contenir jusqu'à 20 atomes de carbone éventuellement interrompus par un ou plusieurs hétéroatome(s) d'oxygène, comme le 1,3-propanediol, le propylèneglycol, le dipropylèneglycol, 2,2-diméthylolpropane, 1,4-cyclohexanediméthanol,
   . le glycérol, le 1,2,4-butanetriol et le 1,2,3-butanetriol,

Comme exemples de monomères monocarboxyliques non sulfonés polyfonctionnels (MMC) éventuels présentant une fonction carboxy réactive et une fonction réactive hydroxy, on peut mentionner :
- les acides hydroxymonocarboxyliques aliphatiques contenant de 2 à 10 atomes de carbone comme les acides 3-hydroxypropionique, 4-hydroxybutyrique ou leurs diesters avec des alcools et des acides carboxyliques de bas poids moléculaire.
sous forme acides ou esters inférieurs (de méthyle, éthyle, propyle, isopropyle, butyle, méthyle de préférence),

Comme exemples de monomères monofonctionnels non sulfonés (MMF) présentant une seule fonction réactive carboxy ou hydroxy, on peut mentionner
- l'acide benzoïque, sous forme sous forme acide, chlorure d'acide ou ester inférieur (de méthyle, éthyle, propyle, isopropyle, butyle, méthyle de préférence),
- les polyoxyalkylèneglycol monoalkyléthers, dont le reste alkyle contient de 1 à 4 atomes de carbone, comme les polyoxyéthylèneglycol monométhyl éthers contenant de 3 à 30 motifs oxyéthylène,

Pour une bonne réalisation de l'invention, la composition monomère (M) dont dérive le copolymère anionique sulfoné (C) comprend :
- un taux de monomère sulfoné (MS) tel que le taux de soufre présent dans ladite composition monomère (M), et provenant dudit monomère (MS) représente de 0,1 à 7%, de préférence de 0,5 à 5% du poids de ladite composition monomère,
- des quantités relatives de monomères (MDC), (MS), (MPF), (MMC) et (MMF), telles que le rapport nombre total de fonctions COOH ou équivalents COOH au nombre total de fonctions OH soit de l'ordre de 0,8 à 4.

Lorsqu'il s'agit d'un copolyester, la composition monomère (M) comprend au moins un monomère non sulfoné (MDC), au moins un monomère sulfoné (MSPF) diacide carboxylique, hydroxyacide ou diol et/ou (MSMF) acide carboxylique ou hydroxy, au moins un monomère non sulfoné (MPF) polyol, éventuellement au moins un monomère non sulfoné (MMC) hydroxyacide et éventuellement au moins un monomère monofonctionnel (MMF) hydroxy.

Lorsqu'il s'agit d'un copolyester, le copolymère (C) est obtenu par réactions de (trans)estérification et polycondensation. Ledit copolymère (C) peut également être obtenu par réactions de (trans)estérification et polycondensation des monomères sous leur forme non sulfonée, puis sulfonation subséquente du polycondensat.

Des procédés de préparation des polyesters ont déjà été décrits dans US-A-3,734,874 , US-A-3,546,008 , US-A-4,233,196 , US-A-3,779,993 , US-A-4,233,196 , US-A-4,300,580 , US-A-4,304,901 , US-A-4,480,085 , US-A-5,369,210 , US-A-5,290,631 , US-A-4,721,580 , US-A-4,968,451 , US-A-5,182,043 , WO 92/04433.

D'une manière préférentielle, ledit copolymère (C) est un copolyester anionique sulfoné.

Un mode particulier de réalisation de l'invention consiste en un système (S) ou (SP) dans lequel la matrice est constituée en un copolyester sulfoné hydrodispersable ou hydrosoluble (C') susceptible d'être obtenu par estérification et/ou transestérification et polycondensation d'une composition monomère à base :
- d'au moins un monomère non sulfoné (MDC) diacide choisi parmi les acides ou anhydrides téréphtalique, isophtalique et 2,6-naphtalènedicarboxylique, ou leurs diesters, en quantité correspondant à un rapport molaire (MDC) / (MDC)+(MS) de l'ordre de 95/100 à 60/100, de préférence de l'ordre de 93/100 à 65/100,
- d'au moins un monomère sulfoné (MS) diacide choisi parmi les acides ou anhydrides sulfo-isophtaliques et sulfo-succiniques et leurs diesters, en quantité correspondant à un rapport molaire (MS) / (MDC)+(MS) de l'ordre de 5/100 à 40/100, de préférence de l'ordre de 7/100 à 35/100,
- et d'au moins un monomère (MPF) polyol choisi parmi l'éthylèneglycol, le propylèneglycol, le diéthylèneglycol, le dipropylèneglycol, le glycérol, le 1,2,4-butanetriol et le 1,2,3-butanetriol, selon une quantité correspondant à un rapport nombre de fonctions OH du monomère polyol (MPF) / nombre de fonctions ou d'équivalents fonctions COOH des monomères diacides (MDC)+(MS) de l'ordre de 1,05 à 4, de préférence de l'ordre de 1,1 à 3,5, et tout particulièrement de l'ordre de 1,8 à 3,
ledit polyester sulfoné (C') présentant une teneur pondérale en soufre de l'ordre de 0,5 à 8 %, de préférence de l'ordre de 1,2 à 6 %.

L'entité élémentaire considérée dans la définition de la mole de monomère (MDC) ou (MS) est la fonction COOH dans le cas des diacides ou l'équivalent fonction COOH dans le cas des anhydrides ou des diesters.

Le monomère diacide non sulfoné (MDC) comprend de préférence de 50 à 100 % molaire, tout particulièrement de 70 à 99 % molaire de téréphtalate de diméthyle et de 0 à 50 % molaire, tout particulièrement de 1 à 30 % molaire, d'acide isophtalique.

Le monomère diacide suifoné (MS) est tout préférentiellement le sodiooxysulfonyl-5 isophtalate de diméthyle.

Le monomère polyol (MPF) préférentiellement mis en oeuvre est le monoéthylèneglycol.

Lesdits polyesters sulfonés hydrosolubles et/ou hydrodispersables (C') peuvent être obtenus par les procédés usuels d'estérification et/ou transestérification et polycondensation, par exemple par réaction d'estérification et/ou transestérification, en présence d'un catalyseur d'estérification /transestérification, du monomère polyol (MPF) avec les différents monomères diacides, chaque diacide étant sous la forme acide, anhydride ou sous la forme d'un de ses diesters, et polycondensation des esters de polyols à pression réduite, en présence d'un catalyseur de polycondensation.

Selon un mode préférentiel de préparation, lesdits polyesters sulfonés hydrosolubles et/ou hydrodispersables (C') sont obtenus en réalisant les étapes successives suivantes :
- une étape de transestérification (interéchange) entre d'une part l'ensemble des monomères sous la forme diester méthylique et d'autre part une quantité de monomère polyol (MPF) correspondant à un rapport nombre de fonctions OH du monomère polyol (MPF)/nombre d'équivalents fonctions COOH desdits monomères sous la forme diester méthylique de l'ordre de 1,05 à 4, de préférence de l'ordre de 1,1 à 3,5, et tout particulièrement de l'ordre de 1,8 à 3,0, à une température de l'ordre de 130 à 220°C, en présence d'un catalyseur de transestérification
- une étape éventuelle d'estérification (dans le milieu de transestérification) entre le monomère sous la forme diacide et une quantité de monomère polyol (MPF), correspondant à un rapport nombre de fonctions OH du monomère polyol (MPF) / nombre de fonctions COOH du monomère sous la forme diacide de l'ordre de 1,05 à 4, de préférence de l'ordre de 1,1 à 3,5, et tout particulièrement de l'ordre de 1,8 à 3,0, à une température de l'ordre de 230 à 280°C, en présence d'un catalyseur d'estérification.
- et une étape de polycondensation, à une température de l'ordre de 230 à 280°C, en présence d'un catalyseur de condensation.

Lesdits copolyesters (C') préférentiels peuvent être représentés par la formule générale :

[-O-C(O)-Ar-C(O)-(O-CH₂-CH₂-)ₙ-]ₘ

où
- le symbole Ar représente un reste 1,4-phénylène, 1,3-phénylène ou 5-sodiooxysulfonyl-1,3-phénylène,
- n est égal à 1, 2, 3 ou 4,
le pourcentage molaire des motifs de formule (O-CH₂-CH₂-)ₙ où n est égal à 1, par rapport à l'ensemble des motifs de formule (O-CH₂-CH₂-)ₙ où n est égal à 1, 2, 3 et 4 étant de l'ordre de 10 à 80, de préférence de l'ordre de 20 à 60.

Selon une variante de réalisation, ledit copolymère (C) est un copolyester anionique sulfoné pouvant en outre contenir :
- des motifs N,N'-dicarbamyle (mDCA) aromatiques, aliphatiques ou cycloaliphatiques, semblables ou différents, de formule :

   -C(O)-NH-E-NH-C(O)-

   où
   le symbole E représente un groupe hydrocarboné aromatique, aliphatique ou cycloaliphatique
- des unités Polyalkylèneoxy (mPAO) présentant de 5 à 150 motifs alkylèneoxy dont le radical alkylène contient de 2 à 4 atomes de carbone,
- et des groupes liants (L') de formule -C(O)-NH- et/ou -NH-C(O)-O-.

Parmi les motifs N,N'-dicarbamyle (mDCA), on peut mentionner des motifs aliphatiques, cycloaliphatiques ou aromatiques, comme les motifs hexaméthylène-N,N'-dicarbamyle, tolylène-N,N'-dicarbamyle, isophorone-N,N'-dicarbamyle, 2-méthylpentane- N,N'-dicarbamyle, norbornène-N,N'-dicarbamyle.

Parmi les unités polyalkylèneoxy (mPAO), on peut mentionner les unités polyéthylèneoxy et/ou polypropylèneoxy présentant une masse moléculaire de l'ordre de 300 à 6000, de préférence de l'ordre de 600 à 4000.

Selon cette variante, ledit copolymère (C) est un copolyester-uréthane anionique sulfoné (CPEU).

Il peut être obtenu par réaction d'un copolyester anionique sulfoné tel que défini ci-dessus avec un polyoxyalkylènediisocyanate présentant des groupes terminaux -NCO et dont le reste polyoxyalkylène présente une masse moléculaire de l'ordre de 300 à 6000, de préférence de l'ordre de 600 à 4000, le rapport du nombre de fonctions -NCO à la totalité des fonctions OH ou équivalents OH du copolyester anionique sulfoné mis en oeuvre étant de l'ordre de 0,5 à 1, de préférence de l'ordre de 0,8 à 1.

Le polyoxyalkylènediisocyanate peut être préalablement obtenu par réaction :
- d'au moins un polyalkylèneglycol tel que les polyéthylèneglycols de masse moléculaire moyenne en nombre de l'ordre de 300 à 6000, de préférence de l'ordre de 600 à 4000
- et d'au moins un diisocyanate aromatique, aliphatique ou cycloaliphatique.

Parmi les diisocyanates, on peut mentionner le toluènediisocyanate, l'hexaméthylènediisocyanate, le diisocyanate d'isophorone, le 2-méthylpentanediisocyanate, le norbornènediisocyanate.

Ce type de copolyester-uréthane (CPEU) et son mode de préparation est décrit notamment dans US-A-4 201 824.

Lesdits copolymères (K) peuvent présenter une température de transition vitreuse, à 85% d'humidité relative, inférieure ou égale à 80°C, de préférence inférieure ou égale à 60°C.

Selon une variante de réalisation de l'invention, ledit système (S) ou (SP) peut en outre renfermer divers additifs organiques ou minéraux, dont la fonction est d'améliorer les propriétés ou l'aspect dudit système.
De tels additifs peuvent avoir pour but par exemple, d'améliorer la stabilité de la matière active, les propriétés mécaniques, l'aspect dudit système, la coulabilité de ce dernier...

A titre d'exemple d'additifs, on peut mentionner :
- des agents anti-UV organiques ou minéraux, permettant de renforcer la stabilité aux rayons UV de l'enveloppe ou de la matrice
- des agents anti-oxydants, permettant d'améliorer la stabilité de la matière active à l'oxygène et aux agents oxydants
- des agents colorants
   en quantité pouvant aller jusqu'à 10% du poids dudit système (S) ou (SP)
- des charges minérales (talc ...) permettant d'améliorer les propriétés mécaniques, la coulabilité du système et l'imperméabilité de ce dernier aux agents extérieurs, en quantité pouvant aller jusqu'à 95%, de préférence jusqu'à 90 % du poids dudit système (S) ou (SP).

Lesdits additifs peuvent être ajoutés en particulier dans la dispersion de polymère.

Conformément au procédé de l'invention, on part d'une dispersion du polymère anionique dans l'eau. Il est à noter que l'invention n'exclut pas le cas où le polymère est tout ou partie solubilisé.

On introduit ensuite la ou les matière(s) active(s) sous forme liquide ou solide.

On obtient une émulsion d'une matière active liquide ou une suspension d'une matière active solide dans le polymère anionique qui sera désignée par la suite système matière(s) actives(s)/dispersion polymérique.

On réalise la préparation de particules renfermant la ou les matière(s) actives(s) selon un procédé de dispersion dans une huile de l'émulsion et/ou de la suspension de matière(s) actives(s) dans la dispersion aqueuse du polymère anionique.

On aboutit à une émulsion et/ou suspension de matière(s) actives(s) incluse(s) dans une dispersion aqueuse de polymère anionique dans une phase huile ce qui correspond dans le cas d'une matière active liquide à une double émulsion et pour une matière active solide à un solide dans la dispersion aqueuse de polymère.

On réalise ensuite la solidification des particules de matière(s) actives(s).

A cet effet, on ajoute un sel métallique.

Un premier mode de réalisation consiste à ajouter après l'émulsification, le sel métallique susceptible de précipiter le polymère anionique.

Une autre voie est d'ajouter le sel métallique sous une forme non réactive au départ, par exemple en même temps que le polymère anionique puis de le transformer en une espèce réactive dans l'étape de mise en forme.

On sépare ensuite la ou les matière(s) actives(s) mise(s) en forme selon les techniques classiques de séparation solide/liquide, de préférence, par filtration.

Une variante du procédé de l'invention consiste à effectuer des particules de matière(s) actives(s) selon la technique de prilling.

### Préparation du système matière(s) actives(s) /dispersion polymérique.

Conformément au procédé de l'invention, on prépare une émulsion et/ou dispersion de matière(s) actives(s) dans une solution et/ou dispersion du polymère anionique dans l'eau.

Le polymère anionique de départ est sous forme de solution et/ou dispersion aqueuse à raison d'une concentration en polymère de 5 à 50 % en poids, de préférence, de 10 à 30 %.

Une variante de réalisation de l'invention consiste à ajouter un émulsifiant.

Les agents émulsifiants (AE) pouvant être présents, sont des émulsifiants de préférence non-ioniques ou anioniques.

Parmi les émulsifiants non-ioniques, on peut citer notamment les dérivés polyoxyalkylénés comme:
- les alcools gras éthoxylés ou éthoxy-propoxylés,
- les triglycérides éthoxylés ou éthoxy-propoxylés,
- les acides gras éthoxylés ou éthoxy-propoxylés,
- les esters de sorbitan éthoxylés ou éthoxy-propoxylés,
- les amines grasses éthoxylées ou éthoxy-propoxylées,
- les di(phényl-1 éthyl) phénols éthoxylés ou éthoxy-propoxylés,
- les tri(phényl-1 éthyl) phénols éthoxylés ou éthoxy-propoxylés,
- les alkylphénols éthoxylés ou éthoxy-propoxylés.

Le nombre de motifs oxyéthylène (OE) et/ou oxypropylène (OP) de ces tensio-actifs non ioniques varie habituellement de 2 à 100 selon la HLB (balance hydrophilie/lipophilie) souhaitée. Plus particulièrement, le nombre de motifs OE et/ou OP se situe entre 2 et 50. De préférence, le nombre de motifs OE et/ou OP est compris entre 10 et 50.

Les alcools gras éthoxylés ou éthoxy-propoxylés comprennent généralement de 6 à 22 atomes de carbone, les motifs OE et OP étant exclus de ces nombres. De préférence, ces motifs sont des motifs éthoxylés.

Les triglycérides éthoxylés ou éthoxy-propoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de poisson, l'huile de palme, l'huile de pépin de raisin, l'huile de soja, l'huile de ricin, l'huile de colza, l'huile de coprah, l'huile de noix de coco et sont de préférence éthoxylés.

Les acides gras éthoxylés ou éthoxy-propoxylés sont des esters d'acide gras (tels que par exemple l'acide oléïque, l'acide stéarique), et sont de préférence éthoxylés.

Les esters de sorbitan éthoxylés ou éthoxy-propoxylés sont des esters du sorbitol cyclisés d'acide gras comprenant de 10 à 20 atomes de carbone comme l'acide laurique, l'acide stéarique ou l'acide oléïque, et sont de préférence éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylèneglycol.

De même, le terme acide gras éthoxylé inclut aussi bien les produits obtenus par éthoxylation d'un acide gras par l'oxyde d'éthylène que ceux obtenus par transestérification d'un acide gras par un polyéthylèneglycol.

Les amines grasses éthoxylés ou éthoxy-propoxylés ont généralement de 10 à 22 atomes de carbone, les motifs OE et OP étant exclus de ces nombres, et sont de préférence éthoxylés.

Les alkylphénols éthoxylés ou éthoxy-propoxylé sont généralement des composés phénoliques éthoxylés ou éthoxy-propoxylés dont le noyau aromatique est porteur de 1 ou 2 groupes alkyle, linéaires ou ramifiés, ayant 4 à 12 atomes de carbone. A titre d'exemples, on peut citer notamment les groupes octyle, nonyle ou dodécyle.

A titre d'exemples de tensio-actifs non ioniques du groupe des alkylphénols éthoxy ou éthoxy-propoxylés, des di(phényl-1 éthyl) phénols éthoxylés et des tri(phényl-1 éthyl) phénols éthoxy ou éthoxy-propoxylés, on peut citer notamment le di(phényl-1 éthyl)phénol éthoxylé avec 5 motifs OE, le di(phényl-1 éthyl)phénol éthoxylé avec 10 motifs OE, le tri(phényl-1 éthyl)phénol éthoxylé avec 16 motifs OE, le tri(phényl-1 éthyl)phénol éthoxylé avec 20 motifs OE, le tri(phényl-1 éthyl)phénol éthoxylé avec 25 motifs OE, le tri(phényl-1 éthyl)phénol éthoxylé avec 40 motifs OE, les tri(phényl-1 éthyl)phénols éthoxy-propoxylés avec 25 motifs OE + OP, le nonylphénol éthoxylé avec 2 motifs OE, le nonylphénol éthoxylé avec 4 motifs OE, le nonylphénol éthoxylé avec 6 motifs OE, le nonylphénol éthoxylé avec 9 motifs OE, les nonylphénols éthoxy-propoxylés avec 25 motifs OE + OP, les nonylphénols éthoxy-propoxylés avec 30 motifs OE + OP, les nonylphénols éthoxy-propoxylés avec 40 motifs OE + OP, les nonylphénols éthoxy-propoxylés avec 55 motifs OE + OP, les nonylphénols éthoxy-propoxylés avec 80 motifs OE + OP.

Parmi les émulsifiants anioniques, on peut citer les sels d'acides gras ; les alkylsulfates (lauryl sulfate de sodium), alkylsulfonates, alkylarylsulfonates (dodécylbenzène sulfonates de sodium, di-butylnaphtalène sulfonate de sodium), alkylsulfosuccinates ou succinamates (dioctylsulfosuccinamate disodique, n-octadécylsulfosuccinamate disodique), alkylphosphates alcalins ; le dodécyldiphénylether disulfonate de sodium ; les sulfonates d'éthers alkylphénolpolyglycoliques ; les sels d'esters d'acides alkylsulfopolycarboxyliques ; les produits de condensation des acides gras avec les acides oxy- et amino- alcanesulfoniques ; les dérivés sulfatés des éthers polyglycoliques ; les esters sulfatés d'acides gras et de polyglycols ; les alcanolamides d'acides gras sulfatés;

Les quantités relatives de matière(s) actives(s) (MA), d'agent émulsifiant (AE) et de polymère anionique (PA) mises en oeuvre sont telles que ladite émulsion, exprimée en sec (ingrédients autres que l'eau), comprenne :
- de 0,5 à 80 %, de préférence de 10 à 60 % de leur poids, de matière(s) actives(s) (MA),
- de 20 à 95 %, de préférence de 40 à 90 % de leur poids, de polymère anionique (PA),
- de 0 à 20 %, de préférence de 0,1 à 10 % de leur poids, d'agent émulsifiant (AE),

La quantité de matières sèches de l'émulsion et/ou dispersion obtenue est généralement comprise entre 10 et 60 % en poids et préférentiellement entre 20 et 50 % en poids.

On effectue la dispersion par simple ajout du polymère dans l'eau, sous forte agitation (par exemple à hélice).

La vitesse d'agitation n'est pas critique. Elle est de préférence énergique, par exemple de l'ordre de 1000 tours/min.

On ajoute sous agitation, la ou les matière(s) actives(s) sous forme liquide ou solide.

La granulométrie moyenne (D50) de l'émulsion et/ou dispersion peut varier largement entre 1 et 500 µm. Elle peut être contrôlée notamment par la vitesse de l'agitation. Elle dépend essentiellement de l'application envisagée. Ainsi, on peut citer que pour une matière active destinée à l'application détergence, elle varie le plus souvent entre 100 et 400 µm alors que pour une application phytosanitaire, elle se situe le plus souvent entre 1 et 20 µm.

La préparation du système matière(s) actives(s)/dispersion polymérique peut être réalisée à une température qui peut être choisie avantageusement dans une gamme de température allant de 20°C à 70°C, de préférence à la température ambiante, (le plus souvent entre 15°C et 25°C).

Selon une variante de l'invention, on peut mettre en oeuvre au cours de cette opération, un sel métallique non réactif qui est un sel métallique insoluble en présence du polymère anionique et qui sera susceptible de libérer son cation par ajout d'un réactif (RE), après la phase de fragmentation, susceptible de le solubiliser.

Comme exemples de sels, on peut citer les carbonates de préférence, de calcium ou de magnésium qui pourront être déplacés.

En ce qui concerne le réactif (RE), il s'agit le plus souvent d'un acide qui réagit avec le sel insoluble pour libérer le cation métallique sous forme soluble.

D'un point de vue pratique, on prépare le système matière(s) actives(s)/dispersion et éventuellement réactif (RE) par simple mélange de ses constituants sous agitation à l'aide d'un agitateur à turbine ou à hélice en particulier par ultra-sons.

### Technique d'émulsification.

Conformément au procédé de l'invention, on effectue dans une étape successive la mise en forme du système matière(s) actives(s)/dispersion polymérique selon plusieurs modes de réalisation : l'un consistant à mettre en oeuvre une technique d'émulsification et l'autre un mode de prilling.

Une première variante consiste à préparer une dispersion dans un liquide hydrophobe du système matière(s) actives(s)/dispersion polymérique précédemment obtenu.

Une étape suivante consiste à précipiter le polymère par ajout d'un cation métallique afin d'obtenir des particules de matière(s) actives(s) qui sont séparées et éventuellement séchées.

Pour la préparation de la dispersion de type eau dans huile, on met en oeuvre un liquide non miscible à l'eau. Dans la suite du texte, on utlisera le terme "huile" d'une manière générique, pour désigner tout liquide organique hydrophobe.

Le terme "non miscible" est synonyme de solubilité dans l'eau à pH 7 ne dépassant pas 10 % en poids.

Comme exemples de liquides organiques convenant à l'invention, on peut citer notamment les huiles végétales, animales ou synthétiques.

On peut citer notamment, l'huile d'arachide, l'huile de beurre, l'huile de graine de coton, l'huile de lin, l'huile d'olive, l'huile de poisson, l'huile de tournesol, l'huile de palme, l'huile de pépin de raisin, l'huile de soja, l'huile de ricin, l'huile de colza, l'huile de coprah, l'huile de noix de coco et sont de préférence éthoxylés.

Quant aux huiles synthétiques, on choisit particulièrement les huiles silicones, de préférence, les huiles polydiméthylsiloxane, les huiles polyphényiméthylsiloxane, l'octaméthylcyclotétrasiloxane, les huiles paraffiniques.

Les quantités relatives de polymère (PA), de liquide non miscible (LM) et éventuellement d'un émulsifiant tel que précité sont les suivantes :
- plus de 50 %, de préférence de 60 à 80 % en volume d'un liquide non miscible (LM),
- au plus 50 %, de préférence de 20 à 40 % en volume du système matière(s) actives(s)/dispersion polymérique (PA),
- de 0 à 20 %, de préférence de 0,1 à 10 % de leur poids, d'agent émulsifiant (AE).

Conformément au procédé de l'invention, on forme une dispersion dans l'huile du système matière(s) actives(s)/dispersion polymérique.

A cet effet, on introduit préférentiellement le système matière(s) actives(s)/dispersion polymérique dans la phase huileuse mais il est également possible de faire l'inverse.

L'opération d'émulsification dure avantageusement entre 1 min et 1 heure selon l'appareillage utilisé.

On obtient une phase huileuse comprenant le système matière(s) actives(s)/dispersion polymérique qui se présente sous forme de double émulsion dans le cas d'une matière active liquide et sous forme émulsion dont la phase dispersée est un solide dans le cas d'une matière active solide.

La taille des gouttelettes dépend de l'application envisagée.

Dans une étape suivante du procédé de l'invention, on réalise l'insolubilisation du polymère.

A cet effet, on ajoute dans l'émulsion obtenue, un cation métallique ou un réactif (RE) libérant le cation métallique introduit à la première étape selon une autre variante de l'invention.

Le choix du cation métallique est tel que l'on obtienne la précipitation du polymère obtenu. On peut faire appel à tout cation métallique soluble dans l'eau dans une zone de pH proche de la neutralité (de préférence, pH = 7 1).

Avantageusement, il s'agit d'un cation ayant une valence égale ou supérieure à 2.

On peut citer tout particulièrement les cations divalents du groupe II A de la classification périodique de préférence les métaux alcalino-terreux tels que le béryllium, le magnésium, le calcium, le baryum ; du groupe I B, notamment le cuivre ; du groupe Il B notamment le zinc

Comme exemples de cations trivalents, on peut mentionner les cations de terre rare choisie parmi les lanthanides ayant un numéro atomique de 57 à 71 et l'yttrium ainsi que le scandium, les cations du groupe III B, notamment aluminium et gallium et du groupe VIII, de préférence, fer.

Pour la définition des éléments, on se réfère ci-après à la Classification périodique des éléments publiée dans le Bulletin de la Société Chimique de France, n°1 (1966).

Le(s) contre-anion(s) sont choisis de préférence parmi les anions minéraux tels que nitrate, sulfate, chlorure, fluorure, hydrogénophosphate, phosphate, hydrogénosulfate, sulfate, ou les anions organiques, de préférence, acétate etc... Les anions peuvent être d'une seule espèce ou être constitués d'un mélange des espèces ; pour des raisons de simplicité on préfère n'avoir qu'une seule espèce ou qu'une seule famille d'espèces.

On choisit préférentiellement un contre-anion de type halogénure.

Le sel mis en oeuvre plus particulièrement est le chlorure de calcium.

La quantité de cation métallique à mettre en oeuvre est généralement choisie de telle sorte qu'elle soit excédentaire par rapport au nombre de fonctions anioniques, de préférence en excès de 100 à 200 %.

Le cation est généralement apporté sous forme d'une solution aqueuse. La concentration de celle-ci est généralement diluée et elle se situe entre 0,5 et 5 mol/l, de préférence, entre 1 et 2 mol/l.

Lorsque le cation métallique est déjà présent dans le milieu sous forme insoluble (par exemple sous forme carbonate) et que l'on ajoute l'agent libérant le cation métallique sous forme soluble (RE), par exemple un acide minéral ou organique, de préférence, l'acide acétique, on l'ajoute en une quantité au moins égale à la stoechiométrie, de préférence, supérieure de 10 à 20 %.

On peut mettre en oeuvre toutes les méthodes de préparation d'émulsions connues de l'homme du métier et qui sont décrites dans "ENCYCLOPEDIA of EMULSIONS TECHNOLOGY", volumes 1 à 3 de Paul BECHER édités par MARCEL DEKKER INC., 1983.

On peut aussi préparer l'émulsion en mettant en oeuvre des microfluidiseurs tels que MENTON GAULIN et MICROFLUIDIZER (MICROFLUIDICS) ou bien en particulier dans le cas d'une phase dispersée solide, des broyeurs colloïdaux (POLYTRON et ULTRA-TURRAX).

On obtient un système triphasique comprenant une phase organique constituée essentiellement par la phase huileuse, une phase aqueuse comprenant les sels métalliques et un solide.

Afin de récupérer les particule solides, on dilue le milieu avec de l'eau. On ajoute une forte quantité d'eau (par exemple égale en volume) éventuellement additionné d'un agent émulsifiant tel que précité à une concentration par exemple de 0,1 à 5 %.

On peut également ajouter une solution à forte concentration ionique, par exemple une solution d'un halogénure d'un alcalino-terreux, de préférence, de chlorure de calcium ayant une concentration variant de 0,1 à 1 mol/l.

Les particules solides décantent et peuvent être séparées selon les techniques classiques de séparation solide/liquide, de préférence, par filtration

On peut éventuellement effectuer un ou plusieurs lavages à l'eau ou à l'aide d'un solvant de la phase huileuse, par exemple un hydrocarbure aliphatique, de préférence, l'heptane.

Dans une étape suivante, on effectue une opération de séchage de l'émulsion ainsi formulée pour obtenir des particules comprenant la ou les matière(s) actives(s).

La méthode mise en oeuvre pour éliminer l'eau de l'émulsion et obtenir des particules peut être effectuée par tout moyen connu de l'homme du métier.

Conviennent par exemple la lyophilisation, qui correspond à une étape de congélation, suivie d'une étape de sublimation, ou bien encore le séchage par atomisation.

Ces modes de séchage, et plus particulièrement celui par atomisation, sont particulièrement indiqués car ils permettent de conserver l'émulsion en l'état et d'obtenir directement des particules.

Le séchage par atomisation peut s'effectuer de manière habituelle dans tout appareil connu tel que par exemple une tour d'atomisation associant une pulvérisation réalisée par une buse ou une turbine avec un courant de gaz chaud.
Les conditions de mise en oeuvre sont fonction de la nature de la matrice, de la thermosensibilité de matière(s) actives(s) et de l'atomiseur utilisé ; ces conditions sont généralement telles que la température de l'ensemble du produit au cours du séchage ne dépasse pas 150°C, de préférence ne dépasse pas 110°C.

Il est à noter que des additifs, tels que les agents antimottants peuvent être incorporés aux particules au moment de cette seconde étape de séchage. On recommande d'utiliser une charge choisie notamment parmi le calcium, le kaolin, la silice, la bentonite ...

La matrice polymérique est ainsi mise en forme sous forme particulaire.

### Technique de prilling.

Un autre mode d'obtention de particules réside dans la technique de prilling.

La caractéristique du procédé de l'invention, en vue de préparer des particules de matrice polymérique incluant la ou les matière(s) actives(s) est de fragmenter la dispersion et/ou suspension de polymère comprenant la ou les matière(s) actives(s) en gouttelettes, et solidifier les gouttelettes obtenues par mise en présence avec un cation métallique de telle sorte qu'elles se solidifient en particules qui sont ensuite récupérées.

Une variante préférée du procédé de l'invention consiste à faire fragmenter la masse polymérique par passage de la dispersion et/ou suspension de polymère comprenant la ou les matière(s) actives(s) au travers d'une buse de façon à former des gouttelettes, à solidifier ces dernières en les mettant en contact avec un cation métallique puis à récupérer les particules obtenues.

Un mode de réalisation préférentielle de l'invention consiste à former les gouttelettes par passage de la masse au travers d'un orifice et tout particulièrement par passage au travers d'une buse, par une buse plate à orifice(s) circulaire(s).

La buse utilisée peut être une buse à un seul trou ou une buse multi-trous avec un nombre de trous qui peut varier entre 1 et 100 trous.

Le diamètre des perforations de la buse est fonction de la taille des particules désirées. II peut être de 100 à 500 µm mais il est choisi, de préférence, entre 200 et 600 µm.
La taille de la perforation est toujours inférieure à la taille de la particule obtenue. Ainsi, on utilise une buse présentant des perforations d'environ 200 µm pour obtenir des particules présentant un diamètre moyen de 600 µm.

La buse utilisée peut être une buse statique mais il est possible de faire appel à une buse soumise à un système de vibration électrique de haute fréquence, par exemple, de 500 à 10000 hertz.

L'opération suivante est d'assurer la "solidification" des gouttelettes en particules est effectuée en les mettant en contact avec une solution d'un cation métallique tel que précédemment défini. Les gouttelettes se solidifient en tombant dans la solution dudit cation. Cette opération a lieu à une température variant de 10°C et 30°C, de préférence, à la température ambiante (15°C à 25°C).

En fin de réaction, on récupère les particules comme précédemment décrit.

Elles peuvent être séchées selon les mêmes techniques que décrites précédemment.

En particulier, le séchage peut être effectué par un courant gazeux (par exempe l'air) : les particules étant mises en lit fluidisé. La température du courant gazeux varie de préférence, entre 20 et 100°C; et plus préférentiellement entre 30 et 60°C.

Les particules de masse polymérique incluant la ou les matière(s) actives(s) ainsi obtenues selon le procédé de l'invention présentent les caractéristiques explicitées ci-dessus.

### Technique de précipitation directe.

Selon une troisième variante de l'invention, il est possible de préparer, dans le cas de la mise en oeuvre de certains polymères, le système multi-particulaire vecteurs de matière(s) active(s) de l'invention, selon un procédé de précipitation directe par le cation métallique.

A cet effet, on ajoute dans le système matière(s) actives(s)/dispersion polymérique dont la préparation est précédemment décrite, un cation métallique afin d'obtenir des particules de matière(s) actives(s) qui précipitent et qui sont séparées et éventuellement séchées.

On se réfère à la description précédente pour le choix des composés apportant le cation métallique.

Il est également possible d'introduire comme précédemment, dans le système matière(s) actives(s)/dispersion polymérique, de préférence, au cours de sa préparation, un cation métallique sous forme insoluble (par exemple sous forme carbonate de calcium) et d'ajouter ensuite le réactif (RE) libérant le cation métallique, par exemple, l'acide acétique.

On obtient ainsi directement des particules solides qui peuvent être séparées selon les techniques classiques de séparation solide/liquide, de préférence, par filtration.

Elles peuvent être ensuite séchées selon les techniques bien connues de l'homme du métier. Les techniques de séchage sur lit fluide et d'atomisation conviennent très bien.

Cette technique de préparation par précipitation directe convient lorsque le polymère est un oligomère de préférence un oligomère copolyester anionique sulfoné de masse moléculaire en poids d'au plus 20 000, de préférence inférieure à 15000 et compris plus particulièrement entre 4 000 et 10 000.

Lesdits oligomères copolyesters sont décrits en particulier dans WO 95/32997, WO 95/2029, WO 96/18715, WO/FR98/00496.

Il est également possible de mettre en oeuvre cette variante d'exécution lorsque l'on met en oeuvre un copolyester sulfoné de masse moléculaire plus élevée supérieure à 20 000 de préférence compris entre 20 000 et 60 000.

L'invention inclut également le cas où l'on part de dispersion polymérique comprenant à la fois des mélanges d'oligomères copolyesters sulfonés et de copolyesters sulfonés.

On met avantageusement des mélanges comprenant au moins 60 % d'oligomères copolyesters sulfonés, de préférence, au moins 80 %.

On obtient ainsi, le système multi-particulaire vecteur de matière(s) active(s) de l'invention qui se présente sous une forme solide aisément manipulable.

Quel que soit le mode de préparation utilisé, les particules obtenues selon l'invention sont redispersables dans l'eau.

La libération de matière(s) actives(s), lors de la remise en dispersion est progressive en raison de l'insolubilisation de la matrice organique (MO) par le sel métallique. En effet, la libération est progressive du fait qu'au contact de l'eau, le polymère gonfle, ne se redisperse pas immédiatement dans l'eau et retenant ainsi la ou les matière(s) actives(s) dans la matrice polymérique.

Ceci est particulièrement le cas lorsque le système multi-particulaire vecteur de matière(s) active(s) est un système multi-particulaire vecteur de parfum appelé système parfumant.

Un autre objet de l'invention consiste en l'utilisation dudit sytème parfumant dans les compositions cosmétiques et notamment dans les compositions détergentes pour le lavage du linge (lavage industriel ou ménager).
Selon l'invention, le sytème multi-particulaire de l'invention peut être utilisé à raison d'environ 0,01 à 0,5 % de préférence de 0,05 à 0,2 % en poids par rapport à la composition détergente.

Les compositions détergentes selon l'invention, comprennent au moins un agent tensio-actif, en quantité généralement de l'ordre de 5 à 60 % en poids, de préférence de 8 à 50 % en poids.
Parmi ceux-ci, on peut citer les agents tensio-actifs anioniques ou non-ioniques habituellement utilisés dans le domaine de la détergence pour le lavage du linge.

Les compositions détergentes faisant l'objet de l'invention, peuvent en outre comprendre des additifs usuels, comme des adjuvants de détergence ("builders") minéraux ou organiques, en quantité telle que la quantité totale d'adjuvant de détergence soit de l'ordre de 5 à 80 % du poids de ladite composition, de préférence de 8 à 40 % en poids, des agents anti-salissures, des agents antiredéposition, des agents de blanchiment, des agents de fluorescence, des agents suppresseurs de mousses, des agents adoucissants, des enzymes et autres additifs.

Un autre objet de l'invention réside dans l'utilisation du sytème multi-particulaire de matière(s) active(s) dans le domaine phytosanitaire.

En effet, il a été mis en évidence de façon surprenante que l'utilisation du système multi-particulaire selon la présente invention pour la formulation de matières actives agrochimiques confèrent à ces matières actives des propriétés tout à fait intéressantes. Ainsi l'inclusion de matières actives dans au moins un système multi-particulaire selon l'invention permet notamment une réduction significative de l'effet de lessivage (lixiviation) par la pluie, ainsi qu'un relargage contrôlé des dites matières actives. Ces effets ont comme conséquences directes, entre autres, une meilleure efficacité des composés agrochimiques épandus ainsi qu'une persistance d'action améliorée et/ou prolongée.

De plus, le système multi-particulaire selon l'invention permet de formuler une ou plusieurs matières actives. Ce système présente notamment un intérêt tout particulier dans le cas de matières actives normalement incompatibles sur le plan chimique et/ou physique : le système selon l'invention apporte un "protection" relative d'une matière active par rapport à l'autre, c'est-à-dire que les matières actives ne sont plus incompatibles lorsque formulées avec le système multi-particulaire selon l'invention.

Il est bien entendu que la ou les matière(s) active(s) incluses dans le système multi-particulaire défini dans la présente description peuvent être formulées selon les techniques classiques de formulation connues dans le domaine de l'agriculture. De telles formulations comprennent par exemple les granulés, les granulés hydrosolubles, les granulés hydrodispersables, les poudres, les poudres mouillables, les flos, les suspensions, les suspensions concentrées, les émulsions, les concentrés émulsionnables, etc.

Il est entendu également que de telles formulations peuvent renfermer, outre la ou les matière(s) active(s) incluses (ou encapsulées) dans au moins un système multi-particulaire, une ou plusieurs matières actives additionnelles, identiques ou différentes sous forme libre, c'est-à-dire non incluses dans le système multi-particulaire. Ainsi, les compositions comprenant d'une part une ou plusieurs matière(s) active(s) incluses (ou encapsulées) dans au moins un système multi-particulaire et d'autre part une ou plusieurs matières actives (qui peuvent être les mêmes ou non) sous forme libre (c'est-à-dire non encapsulées) font également partie de la présente invention.

Un autre objet de l'invention concerne le procédé de traitement des végétaux ou des produits de multiplication des végétaux à l'aide d'une formulation agrochimique comprenant au moins un système multi-particulaire particulaire selon la présente invention. Par produits de multiplication des végétaux, on entend les semences, graines, boutures, tubercules, racines, etc., et, de manière générale, l'ensemble des organismes à partir desquels poussent les végétaux.

Les exemples qui suivent illustrent l'invention sans toutefois la limiter

Les exemples 1 à 3, 10, 16 à 22 concernent des systèmes dans lesquels la matière active est un parfum alors que dans les exemples 4 à 8, 11 à 15, les systèmes obtenus comprennent une matière active phytosanitaire.

L'exemple 1 illustre la mise en forme par prilling, les exemples 2 à 8 ont trait à la technique d'émulsification et les exemples 10 à 15, 16 à 22 exemplifient le mode de précipitation directe.

L'exemple 9 est un exemple d'application phytosanitaire.

Le copolyester anionique sulfoné (copolyester C1) constituant la matrice polymérique est obtenu par estérification / transestérification et polycondensation de téréphtalate de diméthyle, sodium-5-oxysulfonylisophtalate de diméthyle, d'acide isophtalique et de monoéthylèneglycol, et comprenant des unités
- téréphtalate d'éthylèneoxy et de polyéthylèneoxy (ledit motif "polyéthylèneoxy" étant constitué de motifs diéthylèneoxy et/ou triéthylèneoxy et/ou tétraéthylèneoxy),
- isophtalate d'éthylèneoxy et de polyéthylèneoxy (ledit motif "polyéthylèneoxy" étant constitué de motifs diéthylèneoxy et/ou triéthylèneoxy et/ou tétraéthylèneoxy),
- sulfoisophtalate d'éthylèneoxy et de polyéthylèneoxy (ledit motif "polyéthylèneoxy" étant constitué de motifs diéthylèneoxy et/ou triéthylèneoxy et/ou tétraéthylèneoxy),
avec une répartition molaire de
. 70,7 % d'unités téréphtalate,
. 17,7 % d'unités isophtalate et
. 11,6 % d'unités sulfoisophtalate
par rapport à l'ensemble des unités téréphtalate, isophtalate et sulfoisophtalate.

Le pourcentage molaire des motifs de formule (O-CH₂-CH₂-)ₙ où n est égal à 1, par rapport à l'ensemble des motifs de formule (O-CH₂-CH₂-)ₙ où n est égal à 1, 2, 3 et 4 étant de l'ordre de 60 %.

Ledit copolyester présente une masse moléculaire en poids de l'ordre de 60 000 - 65 000, mesurée par chromatographie par perméation de gel, dans le diméthylacétamide contenant 10⁻² N de LiBr, à 100°C. Les résultats sont exprimés en équivalents polystyrène.

L'oligoester C2 mis en oeuvre dans les exemples 10 à 12 est un oligoester de masse moléculaire en poids égale à 9 350 (exprimés en équivalents polystyrène) et comprenant les mêmes unités téréphtalate, isophtalate et sulfoisophtalate avec une répartition molaire de :
. 82 % d'unités téréphtalate,
. 3 % d'unités isophtalate et
. 15 % d'unités sulfoisophtalate

Le pourcentage molaire des motifs de formule (O-CH₂-CH₂-)ₙ où n est égal à 1, par rapport à l'ensemble des motifs de formule (O-CH₂-CH₂-)ₙ où n est égal à 1, 2, 3 et 4 étant de l'ordre de 59 %.

### Exemple 1

### Préparation de la dispersion de copolyester

Dans un récipient en verre équipé d'un agitateur magnétique, on ajoute progressivement, sous forte agitation, 20 g de copolyester C1 de RHODIA, à 80 g d'eau déminéralisée chauffée à 70°C.

On poursuit l'agitation à 70°C pendant 45 minutes avant de filtrer le mélange sur toile à maille de 80 µm.

### Préparation de la dispersion de matière active

Dans un bêcher en verre, on mélange 500 g de la dispersion de copolyester C1 à 20 % avec 25 g de parfum liquide Eagle 3000 de GIVAUDAN-ROURE.

Le mélange est homogénéisé sous ultra-sons (durée : 1 min, puissance à 60 %) avec un sonificateur Bioblock Scientific (réf. M 72412, 600 w) équipé d'une sonde.

### Enrobage

L'émulsion précédente est pulvérisée pendant 1h 45 min à l'aide d'une buse au dessus d'un récipient en verre équipé d'un agitateur magnétique et contenant 2 I de solution aqueuse de CaCl₂ 0,1 M.

Après agitation pendant une nuit, on isole le solide par filtration avant de le sécher en lit fluidisé pendant 30 min à 37°C.

On recueille ainsi 106,5 g de poudre blanche.

### Exemple 2

L'essai a été réalisé avec le copolyester C1 précédemment défini.

Dans 30 g de mélange composé de :
- 9 g de copolyester C1
- 21 g d'eau déminéralisée

On ajoute 1,6 g de parfum Eagle 3000 de GIVAUDAN-ROURE et 0,35 g de SPAN 85.

Le mélange est homogénéisé sous ultra-sons (durée : 1 min, puissance à 35 %) avec un sonificateur Bioblock Scientific réf. M 72412 600w équipé d'une sonde.

Dans un réacteur en verre de 500 ml équipé d'une turbine de Rushton, on prépare une émulsion en ajoutant le mélange précédent dans 200 ml d'huile silicone 47 V 100 PROLABO agitée à 700 t/min.

Après 30 min d'agitation dans ces conditions, on ajoute 250 ml d'une solution de CaCl₂ 1 M à 1 % de TWEEN 20 (PEG 20 monolaurate de sorbitan).

On maintient l'agitation à 700 t/min pendant 1 heure, puis à 500 t/min pendant 2 heures avant de laisser décanter.

La phase huileuse est séparée de la phase aqueuse et traitée deux fois avec 250 ml de solution de CaCl₂ 1 M à 1 % de TWEEN 20. Les phases aqueuses sont rassemblées.

Le solide qui sédimente est recueilli pour être lavé 2 fois avec 200 ml de d'eau distillée à 1 % de TWEEN 20.

Après filtration et séchage à température ambiante, on obtient 8,51 g de poudre blanche.

### Exemple 3

On prépare une première émulsion en mélangeant: 150 g de solution de copolyester C1 à 30 % en poids dans l'eau, 15 g de parfum Eagle 3000 (GIVAUDAN-ROURE) et 1,5 g de SPAN 85 (monolaurate de sorbitan).

Le mélange est homogénéisé sous ultra-sons (durée : 1 min, puissance à 35 %) avec un sonificateur Bioblock Scientific réf. M 72412 600 w équipé d'une sonde.

Le mélange est versé dans un récipient en verre de 3 I contenant 900 ml d'huile silicone 47 V 50 PROLABO agitée à 900 t/min avec une turbine.

Après 30 min d'agitation à température ambiante, on ajoute 250 ml en 20 min une émulsion préalablement obtenue en mélangeant en présence d'ultra-sons, 50 ml de solution aqueuse de CaCl₂ 1 M, 1,5 ml de TWEEN 20 et 100 ml d'huile silicone 47 V 50.

On maintient l'agitation pendant encore 30 min après la fin de l'addition 1 heure, puis on ajoute 800 ml de solution aqueuse de CaCl₂ 1 M contenant 1 % de TWEEEN 20.

Après une heure d'agitation, on laisse décanter le mélange.

La phase huileuse surnageante est soutirée.

Le solide qui a décanté dans la phase aqueuse est recueilli par filtration et lavé à l'heptane.

Après séchage à température ambiante, on obtient 41,92 g de poudre blanche.

### Exemple 4

Dans cet exemple, on effectue l'enrobage de la fénamidone, matière active fongicide de la Société RHONE-POULENC AGRO.

### Préparation de la dispersion de copolyester (pour 100g de dispersion à 30 %)

Dans un récipient en verre équipé d'un agitateur magnétique, on ajoute progressivement, sous forte agitation, 30 g de copolyester C1 de RHODIA, à 70 g d'eau déminéralisée chauffée à 70°C.

On poursuit l'agitation à 70°C pendant 45 minutes avant de filtrer le mélange sur toile à maille de 80 µm.

### Préparation de la dispersion de matière active

Dans un bécher en verre, on mélange 30 g de la dispersion précédente avec 20 g de suspension aqueuse concentrée de fénamidone à 452 g de matière active par kg, et 0,3 g de carbonate de calcium micronisé (Calofort U) Commercialisé par RHODIA CHIMIE.

Le mélange est homogénéisé sous ultra-sons (durée : 30 s, puissance à 35 %) avec un sonificateur Bioblock Scientific réf. M 72412 600 w équipé d'une microsonde.

### Enrobage

Dans un réacteur en verre équipé d'une turbine de Rushton, on ajoute la dispersion précédente à 250 ml d'heptane contenant 1 % (en poids) de SPAN 85.

Le mélange est agité à 1100 t/min pendant 15 min.

Puis, à l'aide d'une seringue, on ajoute en 25 min, sous agitation à 1300 t/min, 1 ml d'acide acétique à 100 % dilué avec 20 ml d'heptane.

Après la coulée, on agite encore pendant 30 min avant d'ajouter 250 ml de solution aqueuse de CaCl₂ molaire contenant 1 % (en poids) de TWEEN 20.

On poursuit l'agitation pendant 2 heures avant de laisser décanter.

La phase organique est séparée puis lavée avec la solution de chlorure de calcium.

Les phases aqueuses sont rassemblées.

On laisse décanter le solide blanc qu'elles contiennent en suspension.

Le solide est recueilli, puis lavé à l'eau déminéralisée, et enfin séché par lyophilisation.

On obtient 18,0 g de poudre blanche composée de particules de diamètre médian (D50, mesuré par granulométrie laser) égal à 19 µm.

### Exemple 5

Dans cet exemple, on met en oeuvre l'isoxaflutole, matière active herbicide de la Société RHONE-POULENC AGRO.

### Préparation de la dispersion de copolyester

On utilise une dispersion de copolyester C1 à 30 % préparée comme décrit précédemment dans l'exemple 4.

### Préparation de la dispersion de matière active

Dans un bécher en verre, on mélange 22 g de la dispersion de copolyester C1 à 30 % avec 28 g d'une suspension aqueuse concentrée d'isoxaflutole à 240 g de matière active par kg, et 0,3 g de carbonate de calcium micronisé (Calofort U) commercialisé par RHODIA CHIMIE.

Le mélange est homogénéisé sous ultra-sons (durée : 1 min, puissance à 40 %) avec un sonificateur Bioblock Scientific (réf. M 72412, 600 w) équipé d'une microsonde.

### Enrobage

Dans un réacteur en verre équipé d'une turbine de Rushton, on ajoute la dispersion précédente à 250 ml d'heptane contenant 1 % (en poids) de SPAN 85.

Le mélange est agité à 1100 t/min pendant 15 min.

Puis, à l'aide d'une seringue, on ajoute en 30 min, sous agitation à 1400 t/min, 1 ml d'acide acétique à 100 % dilué avec 20 ml d'heptane.

Après la coulée, on agite encore pendant 1 heure avant d'ajouter 250 ml d'eau déminéralisée contenant 1 % (en poids) de TWEEN 20.

On poursuit l'agitation à 700 t/min pendant 2 heures avant de laisser décanter.

La phase aqueuse est séparée.

On laisse décanter le solide blanc qu'elle contient en suspension.

Le solide est recueilli, puis lavé à l'eau déminéralisée, et enfin séché par lyophilisation.

On obtient 13,0 g de poudre blanche composée de particules de diamètre médian D50 égal à 92 µm.

### Exemple 6

Dans cet exemple, on effectue l'enrobage de la fénamidone.

### Préparation de la dispersion de copolyester

On utilise une dispersion de copolyester C1 à 30 % préparée comme décrit précédemment dans l'exemple 4.

### Préparation de la dispersion de matière active

Dans un bécher en verre, on mélange 20 g de la dispersion de copolyester C1 à 30 % avec 30 g d'une suspension aqueuse concentrée de fénamidone à 452 g de matière active par kg, et 0,3 g de carbonate de calcium micronisé (Calofort U) commercialisé par RHODIA CHIMIE.

Le mélange est homogénéisé sous ultra-sons (durée : 1 min, puissance à 35 %) avec un sonificateur Bioblock Scientific (réf. M 72412, 600 w) équipé d'une microsonde.

### Enrobage

Dans un réacteur en verre équipé d'une turbine de Rushton, on ajoute la dispersion précédente que l'on dilue avec 50ml d'eau déminéralisée.

Le mélange est agité à 1100 t/min pendant 15 min.

Puis, à l'aide d'une seringue, on ajoute en 29 min, sous agitation à 1300 - 1400 t/min, 1 ml d'acide acétique à 100 % dilué avec 20 ml d'eau déminéralisée.

Après la coulée, on agite encore pendant 30 min à 1400 t/min, puis pendant 2 heures à 700 t/min avant de laisser décanter le solide blanc en suspension.

Le solide est recueilli, puis séché par lyophilisation.

On obtient 18,1 g de poudre blanche composée de particules de diamètre médian D50 égal à 7,6 µm.

### Exemple 7

Dans cet exemple, on met en oeuvre l'isoxaflutole.

### Préparation de la dispersion de copolyester

On utilise une dispersion de copolyester C1 à 30 % préparée comme décrit précédemment dans l'exemple 4.

### Préparation de la dispersion de matière active

Dans un bécher en verre, on mélange 30 g de la dispersion de copolyester C1 à 30 % avec 30 g d'une suspension aqueuse concentrée d'isoxaflutole à 240 g de matière active par kg, et 0,3 g de carbonate de calcium micronisé (Calofort U) commercialisé par RHODIA CHIMIE.

Le mélange est homogénéisé sous ultra-sons (durée : 45 s, puissance à 70 %) avec un sonificateur Bioblock Scientific (réf. M 72412, 600 w) équipé d'une microsonde.

### Enrobage

Dans un réacteur en verre équipé d'une turbine de Rushton, on ajoute la dispersion précédente que l'on dilue avec 32,5 ml d'eau déminéralisée.

Le mélange est agité à 1100 t/min pendant 15 min.

Puis, à l'aide d'une seringue, on ajoute en 28 min, sous agitation à 1300 - 1400 t/min, 1 ml d'acide acétique à 100 % dilué avec 20 ml d'eau déminéralisée.

Après la coulée, on agite encore pendant 30 min à 1400 t/min, puis pendant 3 heures à 700 t/min avant de laisser décanter le solide blanc en suspension.

Le solide est recueilli, puis séché par lyophilisation.

On obtient 19,8 g de poudre blanche composée de particules de diamètre médian D50 égal à 17,5 µm.

### Exemple 8

Dans cet exemple, on met en oeuvre la fénamidone en poudre micronisée.

### Préparation de la dispersion de copolyester

On utilise une dispersion de copolyester C1 à 30 % préparée comme décrit précédemment dans l'exemple 4.

### Préparation de la dispersion de matière active

Dans un bécher en verre, on mélange 30 g de la dispersion de copolyester C1 à 30 % avec 9 g de fénamidone en poudre micronisée (D50 = 3,7 µm), 0.36 g de Rhodasurf 860 P (RHODIA), et 0,3 g de carbonate de calcium micronisé (Calofort U).

Le mélange est homogénéisé sous ultra-sons (durée : 1 min, puissance à 35 %) avec un sonificateur Bioblock Scientific (réf. M 72412, 600 w) équipé d'une microsonde.

### Enrobage

Dans un réacteur en verre équipé d'une turbine de Rushton, on ajoute la dispersion précédente que l'on dilue avec 50ml d'eau déminéralisée.

Le mélange est agité à 1100 t/min pendant 15 min.

Puis, à l'aide d'une seringue, on ajoute en 30 min, sous agitation à 1300 - 1500 t/min, 1 ml d'acide acétique à 100 % dilué avec 20 ml d'eau déminéralisée.

Après la coulée, on agite encore pendant 30 min à 1400 t/min. puis pendant 3 heures à 700 t/min.

Le solide en suspension est séché par lyophilisation.

On obtient 17,8 g de poudre blanche très fine composée de particules de diamètre médian D50 égal à 62 µm.

### Exemple 9

### Test agrochimique d'efficacité et de persistance d'action

On réalise une poudre mouillable (WP1) avec les ingrédients suivants :
- Fénamidone enrobée (Exemple 4) 672 g
- Supragil WP 13 g
- Tixosil 38 AB 7 g
- Supragil MNS90 40 g
- Argirec B22 (qs) 268 g environ

On réalise une seconde poudre mouillable (WP2) comme ci-dessus en utilisant cette fois la fénamidone enrobée obtenue à l'exemple 6.

Pour chacune des formulations WP1 et WP2, les ingrédients sont pesés puis intimement mélangés de manière à rendre l'ensemble homogène par mélange mécanique avec une pâle - IKA.

Une formulation de référence (suspension concentrée aqueuse (SC) contenant 500 g/l de fénamidone) est préparée par mélange puis broyage des ingrédients suivants :
- Fénamidone 500 g
- Rhodasurf 860/P 20 g
- Soprophor FLK 40 g
- Propylène glycol 50 g
- Rhodorsil 432 3 g
- Rhodopol G 1,5 g
- Proxel GXL 0,75 g
- Eau (qs ) 490 g environ

On réalise des essais en plein air sur des plants de pommes de terre infestés par le mildiou.

Quatre essais sont réalisés :
1 - Témoin (pas de traitement)
2 - Traitement par SC
3 - Traitement par WP1
4 - Traitement par WP2

20 jours après les traitements, on constate que :
1 - 100 % des plants non traités sont détruits ;
2 - 20 % des plants traités avec SC sont détruits ;
3 - 12,3 % des plants traités avec WP1 sont détruits ; et
4 - 6,7 % des plants traités avec WP2 sont détruits.

Cette évaluation en plein air met clairement en évidence la supériorité de persistance d'action des formulations WP1 et WP2 (matière active incluse dans le système multi-particulaire) par rapport à une formulation classique (SC).

### Exemple 10

Dans cet exemple, on effectue l'enrobage d'un parfum liquide.

Dans 240 g d'eau déminéralisée chauffée à 70-80°C, on disperse, sous agitation magnétique, 12 g de copolyester C1.

Dès que la dispersion paraît homogène, on ajoute 48 g d'oligoester anionique C2.

Puis, on laisse refroidir le mélange à la température ambiante avant de faire croître son pH de 3 à 7 par ajout d'environ 1,3 ml d'une solution normale de soude.

Ensuite, on ajoute 15 g de parfum Eagle 3000 de GIVAUDAN-ROURE.

La dispersion est réalisée en présence d'ultra-sons (appareil Vibra-cell 72 412 de Bioblock Scientific, pendant 1 min à 70%).

On laisse reposer l'émulsion ainsi obtenue pendant 1 heure à la température ambiante avant de la verser dans un récipient contenant 300 ml de solution de CaCl₂ 1 M, sous agitation magnétique.

On obtient un précipité que l'on filtre sur fritté et que l'on sèche en lit fluidisé dans un appareil AEROMATIC de laboratoire.

On obtient 76,9 g de poudre blanche que l'on broie jusqu'à obtenir des particules d'environ 300 µm, en moyenne (par tamisage).

Le produit contient 18% de parfum (par dosage chromatographique).

### Exemple 11

Dans cet exemple, on met en oeuvre l'isoproturon (3-(4-isopropylphényl)-1,1-diméthylurée), matière active commercialisée par RHONE-POULENC AGRO.

### Préparation de la dispersion de matière active

Dans un bêcher en verre équipé d'un agitateur magnétique et chauffé à 80°C, on dissout 29,6 g d'oligoester C2 dans 118,4 g d'eau déminéralisée.

On laisse refroidir la solution pendant 40 min sous agitation magnétique avant d'y ajouter 80 g d'un slurry à 500 g/l, puis 1,0 g de carbonate de calcium micronisé (Calofort U) commercialisé par RHODIA CHIMIE.

Le mélange est homogénéisé sous ultra-sons (durée : 1 min, puissance à 70%).

### Enrobage

Le mélange précédent est placé dans un réacteur en verre équipé d'une turbine de Rushton.

Puis, à l'aide d'une seringue, on ajoute en 31 min, sous agitation entre 1100 et 1500 t/min, 3,4 ml d'acide acétique à 100 % dilué avec 20 ml d'eau déminéralisée.

Après la coulée, on agite encore pendant 30 min à 1100 t/min, puis pendant 3 heures à 900 t/min.

On obtient une suspension de particules enrobées ayant les caractéristiques granulométriques suivantes :

| D10 (µm) | D50 (µm) | D90 (µm) |
|---|---|---|
| 0,8 | 4,9 | 20,6 |

### Exemple 12

Dans cet exemple, on met en oeuvre l'Isoxaflutole, herbicide commercialisé par RHONE-POULENC AGRO.

### Préparation de la dispersion de matière active

Dans un bêcher en verre équipé d'un agitateur magnétique et chauffé à 80°C, on dissout 9,0 g d'oligoester C2 dans 36 g d'eau déminéralisée.

On laisse refroidir la solution pendant 1 heure sous agitation magnétique avant d'y ajouter 37,05 g d'une suspension aqueuse concentrée à 240 g/kg d'herbicide puis 0,3 g de carbonate de calcium micronisé (Calofort U) commercialisé par RHODIA CHIMIE.

Le mélange est homogénéisé sous ultra-sons (durée: 1 min, puissance à 35%).

### Enrobage

Le mélange précédent est placé dans un réacteur en verre équipé d'une turbine de Rushton.

Puis, à l'aide d'une seringue, on ajoute en 29 min, sous agitation à 1100 t/min, 1,0 ml d'acide acétique à 100 % dilué avec 20 ml d'eau déminéralisée.

Après la coulée, on agite encore pendant 30 min à 1100 t/min, puis pendant 2,5 heures à 900 t/min.

On obtient une suspension de particules enrobées ayant les caractéristiques granulométriques suivantes :

| D10 (µm) | D50 (µm) | D90 (µm) |
|---|---|---|
| 0,6 | 2,7 | 17,5 |

### Exemple 13

Dans cet exemple, on effectue l'enrobage de la fénamidone, fongicide commercialisé par RHONE-POULENC AGRO.

### Préparation de la dispersion de matière active

Dans un bécher en verre, on mélange 20 g de la dispersion de copolyester C1 à 30 % avec 30 g d'une suspension aqueuse concentrée de fénamidone à 452 g de matière active par kg, et 0,3 g de carbonate de calcium micronisé (Calofort U) commercialisé par RHODIA CHIMIE.

Le mélange est homogénéisé sous ultra-sons (durée : 1min, puissance à 35%).

### Enrobage

Dans un réacteur en verre équipé d'une turbine de Rushton, on ajoute la dispersion précédente que l'on dilue avec 50 ml d'eau déminéralisée.

Le mélange est agité à 1100 t/min pendant 15 min.

Puis, à l'aide d'une seringue, on ajoute en 29 min, sous agitation à 1300 - 1400 t/min, 1 ml d'acide acétique à 100 % dilué avec 20 ml d'eau déminéralisée.

Après la coulée, on agite encore pendant 30 min à 1400 t/min, puis pendant 2 heures à 700 t/min avant de laisser décanter le solide blanc en suspension.

Le solide est recueilli, puis séché par lyophilisation.

On obtient 18,1 g de poudre blanche ayant la granulométrie suivante (par granulomètre laser Mastersizer S de Malvern):

| D10 (µm) | D50 (µm) | D90 (µm) |
|---|---|---|
| 1,0 | 7,6 | 29 |

### Exemple 14

Dans cet exemple, on met en oeuvre l'lsoxaflutole.

### Préparation de la dispersion de matière active

Dans un bêcher en verre, on mélange 30 g de la dispersion de copolyester C1 à 30 % avec 30 g de suspension aqueuse concentrée d'isoxaflutole à 240 g de matière active par kg, et 0,3 g de carbonate de calcium micronisé (Calofort U) commercialisé par RHODIA CHIMIE.

Le mélange est homogénéisé sous ultra-sons (durée : 45 s, puissance à 70 %).

### Enrobage

Dans un réacteur en verre équipé d'une turbine de Rushton, on ajoute la dispersion précédente que l'on dilue avec 32,5 ml d'eau déminéralisée.

Le mélange est agité à 1100 t/min pendant 15 min.

Puis, à l'aide d'une seringue, on ajoute en 28 min, sous agitation à 1300 - 1400 t/min, 1 ml d'acide acétique à 100 % dilué avec 20 ml d'eau déminéralisée.

Après la coulée, on agite encore pendant 30 min à 1400 t/min, puis pendant 3 heures à 700 t/min avant de laisser décanter le solide blanc en suspension.

Le solide est recueilli, puis séché par lyophilisation.

On obtient 19,8 g de poudre blanche ayant la granulométrie suivante :

| D10 (µm) | D50 (µm) | D90 (µm) |
|---|---|---|
| 2,7 | 20 | 47 |

### Exemple 15

Dans cet exemple, on met en oeuvre la Fénamidone sous forme de poudre micronisée.

### Préparation de la dispersion de matière active

Dans un bêcher en verre, on mélange 30 g de la dispersion de copolyester C1 à 30 % avec 9 g de fongicide en poudre micronisée (D50 = 3,7µm), 0,36 g de Rhodasurf 860 P (RHODIA), et 0,3 g de carbonate de calcium micronisé (Calofort U).

Le mélange est homogénéisé sous ultra-sons (durée : 1 min, puissance à 35 %).

### Enrobage

Dans un réacteur en verre équipé d'une turbine de Rushton, on ajoute la dispersion précédente que l'on dilue avec 50 ml d'eau déminéralisée.

Le mélange est agité à 1100 t/min pendant 15 min.

Puis, à l'aide d'une seringue, on ajoute en 30 min, sous agitation à 1300 - 1500 t/min, 1 ml d'acide acétique à 100 % dilué avec 20 ml d'eau déminéralisée.

Après la coulée, on agite encore pendant 30 min à 1400 t/min, puis pendant 3 heures à 700 t/min.

Le solide en suspension est séché par lyophilisation.

On obtient 17,8 g de poudre blanche ayant la granulométrie suivante :

| D10 (µm) | D50 (µm) | D90 (µm) |
|---|---|---|
| 10,1 | 62 | 213 |

### Exemple 16

Dans cet exemple, on effectue l'enrobage d'un parfum liquide.

Dans 160 ml d'eau déminéralisée chauffée à 80°C, on disperse, sous agitation magnétique, 40 g d'oligoester anionique C2.

On laisse refroidir le mélange à la température ambiante avant d'ajuster le pH du mélange à 7, par ajout d'une solution normale de soude.

On ajoute ensuite 10 g de parfum Eagle 3000 de GIVAUDAN-ROURE.

La dispersion est réalisée en présence d'ultra-sons (appareil Vibra-cell® 72412 de Bioblock Scientific) pendant 1 min à 70 %.

L'émulsion ainsi obtenue est ensuite versée goutte à goutte en 30 min dans un récipient contenant 200 ml d'une solution de CaCl₂ 1 M, agitée à 1000 t/min à l'aide d'une turbine de Rushton.

On observe l'apparition d'un précipité.

La suspension est encore agitée pendant 2 h 45 min avant d'être filtrée sur fritté.

Le précipité est séché en lit fluidisé avec un appareil AEROMATIC de laboratoire.

On obtient ainsi 47,7 g de poudre blanche que l'on broie et que l'on tamise pour obtenir des particules de taille inférieure à 1 mm.

### Exemple 17

Dans cet exemple, on effectue l'enrobage d'un parfum liquide.

Dans 160 ml d'eau déminéralisée chauffée à 80°C, on disperse, sous agitation magnétique, 8 g de copolyester C1.

Dès que le mélange paraît homogène, on ajoute 32 g d'oligoester anionique C2.

On laisse refroidir le mélange à la température ambiante avant d'ajuster le pH du mélange à 7, par ajout d'une solution normale de soude (11,5 ml).

On ajoute ensuite 10 g de parfum Eagle 3000 de GIVAUDAN-ROURE.

La dispersion est réalisée en présence d'ultra-sons (appareil Vibra-cell 72412 de Bioblock Scientific) pendant 1 min à 70 %.

L'émulsion ainsi obtenue est ensuite versée goutte à goutte en 20 min dans un récipient contenant 200 ml d'une solution aqueuse de Al₂(SO₄)₃, 18 H₂O à 200 g/l, agitée à 800 t/min à l'aide d'une turbine de Rushton.

On observe l'apparition d'un précipité.

La suspension est encore agitée pendant 2 h 45 min avant d'être filtrée sur fritté. Le filtrat est limpide. Le précipité est séché en lit fluidisé avec un appareil AEROMATIC de laboratoire.

On obtient ainsi 44,3 g de poudre blanche que l'on broie et que l'on tamise pour obtenir des particules de taille inférieure à 1 mm.

Un dosage chromatographique indique que la totalité du parfum est incluse dans le polymère.

### Exemple 18

Dans cet exemple, on effectue l'enrobage d'un parfum liquide.

Dans 160 ml d'eau déminéralisée chauffée à 80°C, on disperse, sous agitation magnétique, 8 g de copolyester C1.

Dès que le mélange paraît homogène, on ajoute 32 g d'oligoester anionique C2.

On laisse refroidir le mélange à la température ambiante avant d'ajuster le pH du mélange à 7, par ajout d'une solution normale de soude (11 ml).

On ajoute ensuite 10 g de parfum Eagle 3000 de GIVAUDAN-ROURE.

La dispersion est réalisée en présence d'ultra-sons (appareil Vibra-cell 72412 de Bioblock Scientific) pendant 1 min à 70 %.

L'émulsion ainsi obtenue est ensuite versée goutte à goutte en 20 min dans un récipient contenant 200 ml d'une solution aqueuse de ZnSO₄ à 150 g/l, agitée à 1000 t/min à l'aide d'une turbine de Rushton.

On observe l'apparition d'un précipité.

La suspension est encore agitée pendant 2 h 45 min avant d'être filtrée sur fritté. Le filtrat est limpide. Le précipité est séché en lit fluidisé avec un appareil AEROMATIC de laboratoire.

On obtient ainsi 53,3 g de poudre blanche que l'on broie et que l'on tamise pour obtenir des particules de taille inférieure à 1 mm.

Un dosage chromatographique indique que la totalité du parfum est incluse dans le polymère.

### Exemple 19

Dans cet exemple, on effectue l'enrobage d'un parfum liquide.

Dans 160 ml d'eau déminéralisée chauffée à 80°C, on disperse, sous agitation magnétique, 40 g d'oligoester anionique C2.

On laisse refroidir le mélange à la température ambiante avant d'ajuster le pH du mélange à 7, par ajout d'une solution normale de soude (15 ml).

On ajoute ensuite 10 g de parfum Eagle 3000 de GIVAUDAN-ROURE.

La dispersion est réalisée en présence d'ultra-sons (appareil Vibra-cell 72412 de Bioblock Scientific) pendant 1 min à 70 %.

L'émulsion ainsi obtenue est ensuite versée goutte à goutte en 25 min dans un récipient contenant 200 ml d'une solution de BaCl₂, 2H₂O à 150 g/l, agitée à 1000 t/min à l'aide d'une turbine de Rushton.

On observe l'apparition d'un précipité.

La suspension est encore agitée pendant 2 h 45 min avant d'être filtrée sur fritté. Le filtrat est limpide. Le précipité est séché en lit fluidisé avec un appareil AEROMATIC de laboratoire.

On obtient ainsi 50,4 g de poudre blanche que l'on broie et que l'on tamise pour obtenir des particules de taille inférieure à 1 mm.

### Exemple 20

Dans cet exemple, on effectue l'enrobage d'un parfum liquide.

Dans 100 ml d'eau déminéralisée chauffée à 90°C, on disperse, sous agitation magnétique, 25 g d'oligoester anionique C2.

On laisse refroidir le mélange à la température ambiante avant d'ajuster le pH du mélange à 7, par ajout d'une solution normale de soude (env.10 ml).

On ajoute ensuite 25 g de parfum Eagle 3000 de GIVAUDAN-ROURE.

La dispersion est réalisée en présence d'ultra-sons (appareil Vibra-cell 72412 de Bioblock Scientific) pendant 1 min à 70 %.

L'émulsion ainsi obtenue est ensuite versée goutte à goutte en 17 min dans un récipient contenant 200 ml d'une solution de Al₂(SO₄)₃, 18 H₂O à 200 g/l, agitée à 1200 t/min à l'aide d'une turbine de Rushton.

On observe l'apparition d'un précipité.

La suspension est encore agitée pendant 2 h 45 min avant d'être filtrée sur toile à mailles de 80 µm. Le filtrat est limpide. Le précipité est séché en lit fluidisé avec un appareil AEROMATIC de laboratoire.

On obtient ainsi 50,4 g de poudre blanche ayant des particules d'une taille inférieure à 1 mm.

### Exemple 21

Dans cet exemple, on effectue l'enrobage d'un parfum liquide.

Dans 240 ml d'eau déminéralisée chauffée à 80°C, on disperse, sous agitation magnétique, 12 g de copolyester C1.

Dès que le mélange paraît homogène, on ajoute 48 g d'oligoester anionique C2.

On laisse refroidir le mélange à la température ambiante avant d'ajuster le pH du mélange à 7, par ajout d'une solution normale de soude (17 ml).

On ajoute ensuite 15 g de parfum Eagle 3000 de GIVAUDAN-ROURE.

La dispersion est réalisée en présence d'ultra-sons (appareil Vibra-cell 72412 de Bioblock Scientific) pendant 1 min à 70 %.

L'émulsion ainsi obtenue est ensuite versée goutte à goutte en 20 min dans un récipient contenant 300 ml d'une solution aqueuse molaire de FeSO₄ sous agitation magnétique.

On observe l'apparition d'un précipité.

La suspension est encore agitée pendant 2 h 45 min avant d'être filtrée sur fritté. Le filtrat est limpide. Le précipité est séché en lit fluidisé avec un appareil AEROMATIC de laboratoire.

On obtient ainsi 84,4 g de poudre blanche que l'on broie et que l'on tamise pour obtenir des particules de taille inférieure à 1 mm.

### Exemple 22

Dans cet exemple, on effectue l'enrobage d'un parfum liquide.

Dans 240 ml d'eau déminéralisée chauffée à 80°C, on disperse, sous agitation magnétique, 12 g de copolyester C1.

Dès que le mélange paraît homogène, on ajoute 48 g d'oligoester anionique C2.

On laisse refroidir le mélange à la température ambiante avant d'ajuster le pH du mélange à 7, par ajout d'une solution normale de soude (17 ml).

On ajoute ensuite 15 g de parfum Eagle 3000 de GIVAUDAN-ROURE.

La dispersion est réalisée en présence d'ultra-sons (appareil Vibra-cell 72412 de Bioblock Scientific) pendant 1 min à 70 %.

L'émulsion ainsi obtenue est ensuite versée goutte à goutte en 20 min dans un récipient contenant 300 ml d'une solution aqueuse molaire de CuCl₂ sous agitation magnétique.

On observe l'apparition d'un précipité.

La suspension est encore agitée pendant 2 h 45 min avant d'être filtrée sur fritté. Le filtrat est limpide. Le précipité est séché en lit fluidisé avec un appareil AEROMATIC de laboratoire.

On obtient ainsi 77,4 g de poudre blanche que l'on broie et que l'on tamise pour obtenir des particules de taillé inférieure à 1 mm.

## Revendications

1. Système (S) multi-particulaire vecteur de matière(s) active(s) comprenant au moins une matière active incluse dans une matrice organique hydrophile (MO) comprenant au moins un polymère anionique hydrosoluble et/ou hydrodispersable (K) insolubilisé par un cation métallique, **caractérisé en ce que** ledit polymère anionique hydrosoluble et/ou hydrodispersable (K) est choisi parmi les copolyesters anioniques sulfonés hydrosolubles ou hydrodispersables, susceptibles d'être obtenus par estérification et/ou transestérification et polycondensation d'une composition monomère (M) comprenant :
- au moins un monomère dicarboxylique non sulfoné (MDC), ledit monomère étant aromatique, aliphatique ou cycloaliphatique, exempt de fonction sulfo, et présentant deux fonctions carboxy réactives,
- au moins un monomère sulfoné (MS) polyfonctionnel (MSPF) et/ou monofonctionnel (MSMF), ledit monomère étant aromatique, aliphatique ou cycloaliphatique et présentant au moins une fonction sulfo liée directement ou indirectement à un atome de carbone d'un reste aromatique, aliphatique ou cycloaliphatique et deux fonctions réactives semblables ou différentes, choisies parmi les fonctions carboxy et hydroxy, ou une fonction réactive choisie parmi les fonctions carboxy et hydroxy,
- au moins un monomère non sulfoné (MPF) polyfonctionnel, ledit monomère étant aromatique, aliphatique ou cycloaliphatique, exempt de fonction sulfo et présentant au moins deux fonctions hydroxy,
- éventuellement au moins un monomère monocarboxylique non sulfoné polyfonctionnel (MMC), ledit monomère étant aromatique, aliphatique ou cycloaliphatique, exempt de fonction sulfo et présentant une fonction carboxy réactive et une fonction réactive hydroxy,
- et éventuellement au moins un monomère monofonctionnel non sulfoné (MMF) présentant une fonction réactive carboxy ou hydroxy.

2. Système (S) selon la revendication 1, **caractérisé par le fait que** la ou les matière(s) active(s) appartiennent au domaine de la détergence, de l'alimentaire ou de l'agrochimie.

3. Système (SP) selon la revendication 1, **caractérisé par le fait que** la matière active est un parfum ou les matières actives sont un mélange de parfums sous forme solide ou liquide.

4. Système (S) selon la revendication 1, **caractérisé par le fait que** la ou les matières actives sont des matières actives phytosanitaires choisies parmi les fongicides, les herbicides, les insecticides et les régulateurs de croissance des végétaux, sous forme solide ou liquide.

5. Système (S) ou (SP) selon l'une des revendications 1 à 4, **caractérisé par le fait que** la matière active est sous forme liquide.

6. Système (S) ou (SP) selon l'une des revendications 1 à 4, **caractérisé par le fait que** la matière active est solide en tant que telle ou liquide supportée par un matériau support sous forme multiparticulaire.

7. Système (S) ou (SP) selon la revendication 6, **caractérisé par le fait que** ledit matériau support est un matériau, de préférence minéral, adsorbant et/ou absorbant, inerte ou essentiellement inerte vis-à-vis de la matrice polymérique.

8. Système (S) ou (SP) selon la revendication 7, **caractérisé par le fait que** ledit matériau support est une silice, une argile ou une zéolithe.

9. Système (S) ou (SP) selon l'une des revendications 1 à 8, **caractérisé par le fait qu'**il comprend dans le cas d'une matière active sous forme liquide :
- de 5 à 60 % en poids de matière(s) active(s), de préférence, de 15 à 40 %,
- de 40 à 95 % en poids de matrice polymérique, de préférence de 60 à 85 %.

10. Système (S) ou (SP) selon l'une des revendications 1 à 9, **caractérisé par le fait qu'**il comprend dans le cas d'une matière active sous forme solide :
- de 0,5 à 80 % en poids de matière(s) active(s), de préférence, de 10 à 60 %,
- de 20 à 99,5 % en poids de matrice polymérique, de préférence de 40 à 90 %.

11. Système (S) ou (SP) selon l'une des revendications 1 à 10, **caractérisé par le fait que** ledit système est sous forme multiparticulaire, présentant une taille de particules qui varie entre 0,2 et 500 µm environ, de préférence entre de 0,2 et 100 µm et tout particulièrement entre 0,3 et 10 µ.

12. Système (S) ou (SP) selon l'une des revendications 1 à 10, **caractérisé par le fait que** ledit système est sous forme multiparticulaire, présentant une taille de particules obtenues qui varie entre 100 et 1000 µm, de préférence entre 200 µm et 500 µm.

13. Système (S) ou (SP) selon l'une des revendications 1 à 12, **caractérisé par le fait que** copolymère (K) est insolubilisé par un cation métallique ayant une valence égale ou supérieure à 2, de préférence, un cation divalent du groupe II A, I B, II B de la classification périodique, un cation trivalent de préférence un cation de terre rare, un cation du groupe III B ou du groupe VIII.

14. Système (S) ou (SP) selon la revendicaiton 13, **caractérisé par le fait que** le cation métallique est un cation alcalino-terreux, de préférence, le calcium.

15. Système (S) ou (SP) selon l'une quelconque des revendications 1 à 14), **caractérisé par le fait que** le copolyester anionique sulfoné (K) comprend un taux de motifs sulfonés correspondant à une teneur pondérale en soufre de 0,5 à 8%, de préférence de 1,2 à 6% par rapport au copolymère (K)

16. Système (S) ou (SP) selon l'une quelconque des revendications 1 à 15), **caractérisé par le fait que** la composition monomère (M) dont dérive le copolyester anionique sulfoné (K) comprend :
- un taux de monomère sulfoné (MS) tel que le taux de soufre présent dans ladite composition monomère (M), et provenant dudit monomère (MS) représente de 0,1 à 7%, de préférence de 0,5 à 5% du poids de ladite composition monomère,
- des quantités relatives de monomères (MDC), (MS), (MPF), (MMC) et (MMF), telles que le rapport nombre total de fonctions COOH ou équivalents COOH au nombre total de fonctions OH soit de 0,8 à 4.

17. Système (S) ou (SP) selon la revendication 16, **caractérisé par le fait que** la composition monomère (M) comprend au moins un monomère non sulfoné (MDC), au moins un monomère sulfoné (MSPF) diacide carboxylique, hydroxyacide ou diol et/ou (MSMF) acide carboxylique ou hydroxy, au moins un monomère non sulfoné (MPF) polyol, éventuellement au moins un monomère non sulfoné (MMC) hydroxyacide et éventuellement au moins un monomère monofonctionnel (MMF) hydroxy.

18. Système (S) ou (SP) selon la revendication 17, **caractérisé par le fait que** le copolyester sulfoné est susceptible d'être obtenu par estérification et/ou transestérification et polycondensation d'une composition monomère à base :
- d'au moins un monomère non sulfoné (MDC) diacide choisi parmi les acides ou anhydrides téréphtalique, isophtalique et 2,6 naphtalènedicarboxylique, ou leurs diesters, en quantité correspondant à un rapport molaire (MDC) / (MDC)+(MS) de 95/100 à 60/100, de préférence de 93/100 à 65/100,
- d'au moins un monomère sulfoné (MS) diacide choisi parmi les acides ou anhydrides sulfo-isophtaliques et sulfo-succiniques et leurs diesters, en quantité correspondant à un rapport molaire (MS) / (MDC)+(MS) de 5/100 à 40/100, de préférence de 7/100 à 35/100,
- et d'au moins un monomère (MPF) polyol choisi parmi l'éthylèneglycol, le propylèneglycol, le diéthylèneglycol, le dipropylèneglycol, le glycérol, le 1,2,4-butanetriol et le 1,2,3-butanetriol, selon une quantité correspondant à un rapport nombre de fonctions OH du monomère polyol (MPF) / nombre de fonctions ou d'équivalents fonctions COOH des monomères diacides (MDC)+(MS) de 1,05 à 4, de préférence de 1,1 à 3,5, et tout particulièrement de 1,8 à 3,
ledit copolyester sulfoné présentant une teneur pondérale en soufre de 0,5 à 8%, de préférence de 1,2 à 6%.

19. Système (S) ou (SP) selon la revendication 18, **caractérisé par le fait que** :
- le monomère diacide non sulfoné (MDC) comprend de 50 à 100% molaire, de préférence de 70 à 99% molaire de téréphtalate de diméthyle et de 0 à 50% molaire, de préférence de 1 à 30% molaire, d'acide isophtalique,
- le monomère diacide sulfoné (MS) est le sodiooxysulfonyl-5 isophtalate de diméthyle,
- le monomère polyol (MPF) est le monoéthylène glycol.

20. Système (S) ou (SP) selon l'une des revendications 18 et 19, **caractérisé par le fait que** le copolyester sulfoné a pour formule générale :
[-O-C(O)-Ar-C(O)-(O-CH₂-CH₂-)ₙ-]ₘ
où
- le symbole Ar représente un reste 1,4-phénylène, 1,3-phénylène ou 5-sodiooxysulfonyl-1,3-phénylène,
- n est égal à 1, 2, 3 ou 4,
le pourcentage molaire des motifs de formule (O-CH₂-CH₂-)ₙ où n est égal à 1, par rapport à l'ensemble des motifs de formule (O-CH₂-CH₂-)ₙ où n est égal à 1, 2, 3 et 4 étant de l'ordre de 10 à 80, de préférence de l'ordre de 20 à 60.

21. Système (S) ou (SP) selon l'une quelconque des revendications 17 à 20, **caractérisé par le fait que** ledit copolyester sulfoné comprend en outre
- des motifs N,N'-dicarbamyles (mDCA) aromatiques, aliphatiques ou cycloaliphatiques, semblables ou différents, de formule
-C(O)-NH-E-NH-C(O)-
où
le symbole E représente un groupe hydrocarboné aromatique, aliphatique ou cycloaliphatique,
- des unités polyalkylèneoxy (mPAO) présentant de 5 à 150 motifs alkylèneoxy dont le radical alkylène contient de 2 à 4 atomes de carbone,
- et des groupes liants (L') de formule -C(O)-NH- et/ou -NH-C(O)-O-.
susceptibles d'être obtenus par réaction dudit copolyester anionique sulfoné avec un polyoxyalkylène diisisocyanate présentant des groupes terminaux -NCO et dont le reste polyoxyalkylène présente une masse moléculaire de 300 à 6000, de préférence de 600 à 4000, le rapport du nombre de fonctions -NCO à la totalité des fonctions OH ou équivalents OH du copolyester anionique sulfoné mis en oeuvre étant de 0,5 à 1, de préférence de 0,8 à 1.

22. Système (S) ou (SP) selon l'une des revendications 1 à 21, **caractérisé par le fait que** ledit système comprend en outre au moins un additif susceptible d'améliorer la stabilité de la matière active, les propriétés mécaniques, l'aspect dudit système ou la coulabilité de ce dernier.

23. Système (S) ou (SP) selon l'une des revendications 1 à 22, **caractérisé par le fait qu'**il est susceptible d'être obtenu par une technique d'émulsification, de prilling ou de précipitation directe.

24. Procédé d'obtention dudit système vecteur de matière(s) active (s) décrit dans l'une des revendications 1 à 23, **caractérisé par le fait qu'**il consiste à introduire la ou les matières actives dans une dispersion aqueuse comprenant au moins un polymère anionique hydrosoluble et/ou hydrodispersable (K) qui est mise en forme et à insolubiliser le polymère anionique par mise en présence d'un cation métallique conduisant à des particules de matrice polymérique incluant la ou les matières actives.

25. Procédé selon la revendication 24 **caractérisé par le fait que** l'on prépare une émulsion et/ou dispersion de matière(s) actives(s) dans une solution et/ou dispersion du polymère anionique dans l'eau.

26. Procédé selon l'une des revendications 24 et 25 **caractérisé par le fait que** l'on prépare une solution et/ou dispersion aqueuse d'un polymère anionique ayant une concentration en polymère de 5 à 50 % en poids, de préférence, de 10 à 30 %.

27. Procédé selon l'une des revendications 24 à 26, **caractérisé par le fait que** l'on ajoute un émulsifiant non-ionique ou anionique.

28. Procédé selon la revendication 27 **caractérisé par le fait que** l'émulsifiant non-ionique est choisi parmi :
- les alcools gras éthoxylés ou éthoxy-propoxylés,
- les triglycérides éthoxylés ou éthoxy-propoxylés,
- les acides gras éthoxylés ou éthoxy-propoxylés,
- les esters de sorbitan éthoxylés ou éthoxy-propoxylés,
- les amines grasses éthoxylées ou éthoxy-propoxylées,
- les di(phényl-1 éthyl) phénols éthoxylés ou éthoxy-propoxylés,
- les tri(phényl-1 éthyl) phénols éthoxylés ou éthoxy-propoxylés,
- les alkylphénols éthoxylés ou éthoxy-propoxylés,
et l'émulsifiant anionique est choisi :
- les sels d'acides gras,
- les alkylsulfates, alkylsulfonates, alkylsulfosuccinates ou succinamates, alkylphosphates alcalins,
- le dodécyldiphénylether disulfonate de sodium,
- les sulfonates d'éthers alkylphénolpolyglycoliques,
- les sels d'esters d'acides alkylsulfopolycarboxyliques,
- les produits de condensation des acides gras avec les acides oxy- et aminoalcanesulfoniques,
- les dérivés sulfatés des éthers polyglycoliques,
- les esters sulfatés d'acides gras et de polyglycols,
- les alcanolamides d'acides gras sulfatés.

29. Procédé selon l'une des revendications 24 à 28 **caractérisé par le fait que** les quantités relatives de matière(s) actives(s) (MA), d'agent émulsifiant (AE) et de polymère anionique (K) mises en oeuvre sont telles que ladite émulsion, exprimée en sec, comprenne :
- de 0,5 à 80 %, de préférence de 10 à 60 % de leur poids, de matière(s) actives(s) (MA),
- de 20 à 95 %, de préférence de 40 à 90 % de leur poids, de polymère anionique (K),
- de 0 à 20 %, de préférence de 0,1 à 10 % de leur poids, d'agent émulsifiant (AE).

30. Procédé selon l'une des revendications 24 à 29 **caractérisé par le fait que** la quantité de matière sèche de l'émulsion et/ou dispersion obtenue est généralement comprise entre 10 et 60 % en poids et préférentiellement entre 20 et 50 % en poids.

31. Procédé selon l'une des revendications 24 à 30 **caractérisé par le fait que** l'on ajoute la ou les matières actives sous forme liquide ou solide dans la solution et/ou dispersion de polymère anionique.

32. Procédé selon la revendication 31 **caractérisé par le fait que** la granulométrie moyenne de l'émulsion et/ou dispersion est comprise entre 1 et 500 µm et préférentiellement entre 100 et 400 µm pour une application détergence et 1 et 20 µm pour une application phytosanitaire.

33. Procédé selon l'une des revendications 24 à 32 **caractérisé par le fait que** l'on met en oeuvre au cours de cette opération, un sel métallique non réactif qui est un sel métallique insoluble en présence du polymère anionique et qui sera susceptible de libérer son cation par ajout d'un réactif (RE), après la phase de fragmentation, susceptible de le solubiliser.

34. Procédé selon la revendication 33 **caractérisé par le fait que** le sel insoluble est un carbonate de préférence, de calcium ou de magnésium.

35. Procédé selon la revendication 34 **caractérisé par le fait que** le réactif (RE) est un acide, préférence l'acide acétique.

36. Procédé selon l'une des revendications 24 à 35 **caractérisé par le fait que** l'on prépare une dispersion dans un liquide hydrophobe du système matière(s) actives(s)/dispersion polymérique précédemment obtenu puis l'on précipite le polymère par ajout d'un cation métallique afin d'obtenir des particules de matière(s) actives(s) qui sont séparées et éventuellement séchées.

37. Procédé selon la revendication 36 **caractérisé par le fait que** le liquide hydrophobe est une huile végétales, animale ou synthétique, de préférence les huiles silicones, et plus préférentiellement, les huiles polydiméthylsiloxane, les huiles polyphénylméthylsiloxane, l'octaméthylcyclotétrasiloxane, les huiles paraffiniques.

38. Procédé selon l'une des revendications 36 et 37 **caractérisé par le fait que** les quantités relatives de polymère (K), de liquide non miscible (LM) et éventuellement d'un émulsifiant tel que précité sont les suivantes :
- plus de 50 %, de préférence de 60 à 80 % en volume d'un liquide non miscible (LM),
- au plus 50 %, de préférence de 20 à 40 % en volume du système matière(s) actives(s)/dispersion polymérique (K),
- de 0 à 20 %, de préférence de 0,1 à 10 % de leur poids, d'agent émulsifiant (AE).

39. Procédé selon l'une des revendications 36 à 38 **caractérisé par le fait que** l'on forme une phase huileuse comprenant le système matière(s) actives(s)/dispersion polymérique qui se présente sous forme de double émulsion dans le cas d'une matière active liquide et sous forme émulsion dont la phase dispersée est un solide dans le cas d'une matière active solide.

40. Procédé selon l'une des revendications 24 à 39 **caractérisé par le fait que** l'on ajoute un additif susceptible d'améliorer la stabilité de la matière active, les propriétés mécaniques, l'aspect dudit système ou la coulabilité de ce dernier.

41. Procédé selon l'une des revendications 24 à 40 **caractérisé par le fait que** l'on réalise l'insolubilisation du polymère par ajout dans l'émulsion obtenue, d'un cation métallique ou d'un réactif (RE) libérant le cation métallique introduit à la première étape.

42. Procédé selon la revendication 41 **caractérisé par le fait que** le cation métallique est tel que l'on obtienne la précipitation du polymère et qu'il soit soluble dans l'eau dans une zone de pH proche de la neutralité.

43. Procédé selon l'une des revendications 41 et 42 **caractérisé par le fait que** le cation a une valence égale ou supérieure à 2.

44. Procédé selon l'une des revendications 41 à 43 **caractérisé par le fait que** le cation métallique est un cation divalent du groupe II A de la classification périodique de préférence un métal alcalino-terreux tels que le béryllium, le magnésium, le calcium, le baryum ; du groupe I B, de préférence, le cuivre ; du groupe II B, de préférence, le zinc ou un cation trivalent de préférence un cation de terre rare choisie parmi les lanthanides ayant un numéro atomique de 57 à 71 et l'yttrium ainsi que le scandium ; un cation du groupe III B, notamment aluminium et gallium et du groupe VIII, de préférence, le fer.

45. Procédé selon l'une des revendications 41 à 43 **caractérisé par le fait que** le cation métallique est apporté par le chlorure de calcium.

46. Procédé selon l'une des revendications 41 à 45 **caractérisé par le fait que** la quantité de cation métallique à mettre en oeuvre est choisie de telle sorte qu'elle soit excédentaire par rapport au nombre de fonctions anioniques, de préférence en excès de 100 à 200 %.

47. Procédé selon l'une des revendications 41 à 46 **caractérisé par le fait que** le cation est apporté sous forme d'une solution aqueuse dont la concentration se situe entre 0,5 et 5 mol/l, de préférence, entre 1 et 2 mol/l.

48. Procédé selon l'une des revendications 41 à 47 **caractérisé par le fait que** l'on ajoute l'agent libérant le cation métallique sous forme soluble (RE), par exemple un acide minéral ou organique, de préférence, l'acide acétique en une quantité au moins égale à la stoechiométrie, de préférence, supérieure de 10 à 20%.

49. Procédé selon l'une des revendications 41 à 48 **caractérisé par le fait que** l'on récupère les particule solides à partir d'un système triphasique par dilution ou ajout d'une solution à forte concentration ionique puis séparation des particules.

50. Procédé selon l'une des revendications 41 à 49 **caractérisé par le fait que** l'on effectue une opération de séchage de l'émulsion ainsi formulée pour obtenir des particules comprenant la matière active par lyophilisation ou par atomisation.

51. Procédé selon l'une des revendications 24 à 35 **caractérisé par le fait que** l'on fragmente la dispersion et/ou suspension de polymère comprenant la matière active en gouttelettes, et solidifier les gouttelettes obtenues par mise en présence avec un cation métallique de telle sorte qu'elles se solidifient en particules qui sont ensuite récupérées.

52. Procédé selon la revendication 51 **caractérisé par le fait que** l'on fragmente la masse polymérique par passage de la dispersion et/ou suspension de polymère comprenant la matière active au travers d'une buse de façon à former des gouttelettes, à solidifier ces dernières en les mettant en contact avec un cation métallique puis à récupérer les particules obtenues.

53. Procédé selon l'une des revendications 51 et 52 **caractérisé par le fait que** l'on assure la "solidification" des gouttelettes en particules en les mettant en contact avec une solution d'un cation métallique tel que précédemment défini dans l'une des revendications 41 à 47.

54. Procédé selon l'une des revendications 51 à 53 **caractérisé par le fait que** l'on sèche les particules selon la revendication 50 ou sur lit fluidisé.

55. Procédé de préparation du système (S) ou (SP) selon l'une quelconque des revendications 24 à 35, **caractérisé par le fait que** la matrice polymérique comprend au moins un oligomère copolyester sulfoné (K) de masse moléculaire en poids d'au plus 20 000, de préférence inférieure à 15 000 et compris plus particulièrement entre 4 000 et 10 000 et/ou un copolyester sulfoné (K) de masse moléculaire en poids supérieure à 20 000, de préférence jusqu'à 60 000 et que l'on réalise l'insolubilisation du polymère par ajout d'un cation métallique dans le système matière(s) actives(s)/dispersion aqueuse d'oligomère copolyester anionique sulfoné et/ou copolyester sulfoné.

56. Procédé selon la revendication 55 **caractérisé par le fait que** l'on met en oeuvre des mélanges d'oligomère copolyester sulfoné et de copolyester sulfoné comprenant au moins 60 % d'un oligomère copolyester sulfoné, de préférence, au moins 80 %.

57. Procédé selon l'une des revendications 55 et 56 **caractérisé par le fait que** l'on ajoute lors de la préparation du système matière(s) actives(s)/dispersion aqueuse d'un oligomère copolyester et/ou d'un copolyester, un cation métallique sous forme insoluble puis successivement dans ledit système obtenu, un réactif (RE) libérant le cation métallique.

58. Procédé selon l'une des revendications 55 à 57 **caractérisé par le fait que** l'on met en oeuvre un cation métallique sous forme soluble, ou sous forme insoluble associé à un réactif (RE) tel que précédemment défini dans l'une des revendications 41 à 48.

59. Procédé selon l'une des revendications 55 à 58 **caractérisé par le fait que** l'on sèche les particules selon la revendication 50 ou sur lit fluidisé.

60. Utilisation du système (SP) faisant l'objet de l'une des revendications 3, 5 à 26 comme additif parfumant dans les compositions détergentes, pour le lavage du linge notamment.

61. Compositions détergentes, pour le lavage du linge notamment, comprenant au moins un système (SP) faisant l'objet de l'une des revendications 3, 5 à 26.

62. Utilisation du système (S) faisant l'objet de l'une des revendications 2, et 4 à 26 comme agent d'encapsulation d'une ou plusieurs matières actives phytosanitaires dans les compositions phytosanitaires, notamment pour les traitements agrochimiques.

63. Compositions agrochimiques comprenant une ou plusieurs matières actives agrochimiques incluses dans au moins un système multi-particulaire défini dans l'une des revendications 2, et 4 à 26.

64. Compositions agrochimiques selon la revendication 63 dans lesquelles la matière active est la fénamidone.

65. Compositions agrochimiques selon la revendication 63 dans lesquelles la matière active est l'isoxaflutole.

66. Compositions agrochimiques selon la revendication 63 comprenant au moins deux matières actives.

67. Compositions agrochimiques selon la revendication 66 dans laquelle deux matières actives au moins sont incompatibles.

68. Compositions agrochimiques selon l'une des revendications 63 à 67 dans lesquelles au moins une matière active est partiellement ou totalement sous forme libre.

69. Procédé de traitement des végétaux ou des produits de multiplication des végétaux à l'aide d'une formulation agrochimique comprenant au moins un système multi-particulaire selon l'une des revendications 2, et 4 à 26.

## Patentansprüche

1. Multipartikuläres Wirkstoffträgersystem (S), enthaltend mindestens einen Wirkstoff, der in einer hydrophilen organischen Matrix (OM), die mindestens ein durch ein Metallkation unlöslich gemachtes wasserlösliches und/oder wasserdispergierbares anionisches Polymer (K) enthält, eingeschlossen ist, **dadurch gekennzeichnet, daß** das wasserlösliche und/oder wasserdispergierbare anionische Polymer (K) unter wasserlöslichen oder wasserdispergierbaren sulfonierten anionischen Copolyestern, die durch Veresterung und/oder Umesterung oder Polykondensation einer Monomerzusammensetzung (M), enthaltend:
- mindestens ein nichtsulfoniertes Dicarbonsäuremonomer (DCM), das aromatisch, aliphatisch oder cycloaliphatisch ist, keine Sulfofunktion enthält und zwei reaktive Carboxylfunktionen aufweist,
- mindestens ein polyfunktionelles (PFSM) und/oder monofunktionelles (MFSM) sulfoniertes Monomer (SM), das aromatisch, aliphatisch oder cycloaliphatisch ist und mindestes eine direkt oder indirekt an ein Kohlenstoffatom eines aromatischen, aliphatischen oder cycloaliphatischen Rests gebundene Sulfofunktion und zwei gleiche oder verschiedene, unter Carboxyl- und Hydroxylfunktionen ausgewählte reaktive Funktionen oder eine unter Carboxylund Hydroxylfunktionen ausgewählte reaktive Funktion aufweist,
- mindestens ein polyfunktionelles nichtsulfoniertes Monomer (PFM), das aromatisch, aliphatisch oder cycloaliphatisch ist, keine Sulfofunktion enthält und mindestens zwei Hydroxylfunktionen aufweist,
- gegebenenfalls mindestens ein polyfunktionelles nichtsulfoniertes Monocarbonsäuremonomer (MCM), das aromatisch, aliphatisch oder cycloaliphatisch ist, keine Sulfofunktion enthält und eine reaktive Carboxylfunktion und eine reaktive Hydroxylfunktion aufweist,
- und gegebenenfalls mindestens ein nichtsulfoniertes monofunktionelles Monomer (MFM), das eine reaktive Carboxyl- oder Hydroxylfunktion aufweist,
erhältlich sind, ausgewählt ist.

2. System (S) nach Anspruch 1, **dadurch gekennzeichnet, daß** der Wirkstoff bzw. die Wirkstoffe zum Gebiet der Wasch- und Reinigungsmittel, der Lebensmittel oder der Agrarchemie gehören.

3. System (DS) nach Anspruch 1, **dadurch gekennzeichnet, daß** es sich bei dem Wirkstoff um einen Duftstoff bzw. bei den Wirkstoffen um eine Duftstoffmischung in fester oder flüssiger Form handelt.

4. System (S) nach Anspruch 1, **dadurch gekennzeichnet, daß** es sich bei dem Wirkstoff bzw. den Wirkstoffen um unter Fungiziden, Herbiziden, Insektiziden und Pflanzenwachstumsreglern ausgewählte Pflanzenschutzwirkstoffe in fester oder flüssiger Form handelt.

5. System (S) oder (DS) nach einem der Ansprüche 1 bis 4, **dadurch gekennzeichnet, daß** der Wirkstoff in flüssiger Form vorliegt.

6. System (S) oder (DS) nach einem der Ansprüche 1 bis 4, **dadurch gekennzeichnet, daß** der Wirkstoff an sich fest ist oder flüssig auf einem Trägermaterial in multipartikulärer Form geträgert ist.

7. System (S) oder (DS) nach Anspruch 6, **dadurch gekennzeichnet, daß** es sich bei dem Trägermaterial um ein gegenüber der Polymermatrix zumindest im wesentlichen inertes, vorzugsweise anorganisches Adsorptions- und/oder Absorptionsmaterial handelt.

8. System (S) oder (DS) nach Anspruch 7, **dadurch gekennzeichnet, daß** es sich bei dem Trägermaterial um ein Siliciumdioxid, einen Ton oder einen Zeolith handelt.

9. System (S) oder (DS) nach einem der Ansprüche 1 bis 8, **dadurch gekennzeichnet, daß** es im Fall eines Wirkstoffs in flüssiger Form:
- 5 bis 60 Gew.-% Wirkstoff(e), vorzugsweise 15 bis 40%,
- 40 bis 95 Gew.-% Polymermatrix, vorzugsweise 60 bis 85%,
enthält.

10. System (S) oder (DS) nach einem der Ansprüche 1 bis 9, **dadurch gekennzeichnet, daß** es im Fall eines Wirkstoffs in fester Form:
- 0,5 bis 80 Gew.-% Wirkstoff(e), vorzugsweise 10 bis 60%,
- 20 bis 99,5 Gew.-% Polymermatrix, vorzugsweise 40 bis 90%,
enthält.

11. System (S) oder (DS) nach einem der Ansprüche 1 bis 10, **dadurch gekennzeichnet, daß** es in multipartikulärer Form mit einer Teilchengröße zwischen ungefähr 0,2 und 500 µm, vorzugsweise zwischen 0,2 und 100 µm und ganz besonders zwischen 0,3 und 10 µm vorliegt.

12. System (S) oder (DS) nach einem der Ansprüche 1 bis 10, **dadurch gekennzeichnet, daß** es in multipartikulärer Form mit einer Größe der erhaltenen Teilchen zwischen 100 und 100 µm, vorzugsweise zwischen 200 und 500 µm, vorliegt.

13. System (S) oder (DS) nach einem der Ansprüche 1 bis 12, **dadurch gekennzeichnet, daß** das Copolymer (K) durch ein Metallkation mit einer Wertigkeit größer gleich 2, vorzugsweise ein zweiwertiges Kation aus der Gruppe II A, I B, II B des Periodensystems, ein dreiwertiges Kation, vorzugsweise ein Seltenerdmetallkation oder ein Kation der Gruppe III B oder der Gruppe VIII unlöslich gemacht ist.

14. System (S) oder (DS) nach Anspruch 13, **dadurch gekennzeichnet, daß** es sich bei dem Metallkation um ein Erdalkalimetallkation, vorzugsweise Calcium, handelt.

15. System (S) oder (DS) nach einem der Ansprüche 1 bis 14, **dadurch gekennzeichnet, daß** der sulfonierte anionische Copolyester (K) einen Gehalt an sulfonierten Einheiten aufweist, der einem Schwefelgewichtsanteil von 0,5 bis 8%, vorzugsweise 1,2 bis 6%, bezogen auf das Copolymer (K), entspricht.

16. System (S) oder (DS) nach einem der Ansprüche 1 bis 15, **dadurch gekennzeichnet, daß** die Monomerzusammensetzung (M), von der sich der sulfonierte anionische Copolyester (K) ableitet:
- einen solchen Gehalt an sulfoniertem Monomer (SM), daß der von dem Monomer (SM) stammende Schwefelgehalt in der Monomerzusammensetzung (M) 0,1 bis 7 Gew.-%, vorzugsweise 0,5 bis 5 Gew.-%, bezogen auf die Monomerzusammensetzung, beträgt, und
- solche relative Mengen der Monomere (DCM), (SM), (FPM), (MCM) und (MFM), daß das Verhältnis der Gesamtzahl an COOH-Funktionen oder COOH-Äquivalenten zur Gesamtzahl der OH-Funktionen 0,8 bis 4 beträgt,
enthält.

17. System (S) oder (DS) nach Anspruch 16, **dadurch gekennzeichnet, daß** die Monomerzusammensetzung (M) mindestens ein nichtsulfoniertes Monomer (DCM), mindestens ein sulfoniertes Dicarbonsäure-, Hydroxysäure- oder Diolmonomer (PFMS) und/oder Carbonsäure- oder Hydroxymonomer (MFMS), mindestens ein nichtsulfoniertes Polyolmonomer (PFM), gegebenenfalls mindestens ein nichtsulfoniertes Hydroxysäuremonomer (MCM) und gegebenenfalls mindestens ein monofunktionelles Hydroxymonomer (MFM) enthält.

18. System (S) oder (DS) nach Anspruch 17, **dadurch gekennzeichnet, daß** der sulfonierte Copolyester durch Veresterung und/oder Umesterung und Polykondensation einer Monomerzusammensetzung auf Basis von:
- mindestens einem nichtsulfonierten Disäuremonomer (DCM), ausgewählt unter Terephthalsäure, Isophthalsäure, 2,6-Naphthalindicarbonsäure und Anhydriden und Diestern davon, in einer einem (DCM)/(DCM)+(SM)-Molverhältnis von 95/100 bis 60/100, vorzugsweise 93/100 bis 65/100, entsprechenden Menge,
- mindestens einem sulfonierten Disäuremonomer (SM), ausgewählt unter Sulfoisophthalsäuren und Sulfobernsteinsäuren und Anhhydriden und Diestern davon in einer einem (SM)/(DCM)+(SM)-Molverhältnis von 5/100 bis 40/100, vorzugsweise 7/100 bis 35/100, entsprechenden Menge
- und mindestens einem Polyolmonomer (PFM), ausgewählt unter Ethylenglykol, Propylenglykol, Diethylenglykol, Dipropylenglykol, Glycerin, 1,2,4-Butantriol und 1,2,3-Butantriol, in einer einem Verhältnis der Zahl der OH-Funktionen des Polyolmonomers (PFM) zur Zahl der COOH-Funktionen oder Äquivalente von COOH-Funktionen der Disäuremonomere (DCM)+(SM) von 1,05 bis 4, vorzugsweise 1,1 bis 3,5 und ganz besonders 1,8 bis 3 entsprechenden Menge
erhältlich ist und einen Schwefelgewichtsanteil von 0,5 bis 8%, vorzugsweise 1,2 bis 6%, aufweist.

19. System (S) oder (DS) nach Anspruch 18, **dadurch gekennzeichnet, daß**:
- das nichtsulfonierte Disäuremonomer (DCM) 50 bis 100 Mol-%, vorzugsweise 70 bis 99 Mol-%, Terephthalsäuredimethylester und 0 bis 50 Mol-%, vorzugsweise 1 bis 30 Mol-%, Isophthalsäure enthält,
- es sich bei dem sulfonierten Disäuremonomer (SM) um 5-(Natriumoxysulfonyl)isophthalsäuredimethylester handelt,
- es sich bei dem Polyolmonomer (PFM) um Monoethylenglykol handelt.

20. System (S) oder (DS) nach Anspruch 18 oder 19, **dadurch gekennzeichnet, daß** der sulfonierte Copolyester die allgemeine Formel:
[-O-C(O)-Ar-C(O)-(O-CH₂-CH₂-)ₙ-]ₘ
aufweist, worin
- das Symbol Ar für einen 1,4-Phenylen-, 1,3-Phenylen- oder 5-Natriumoxysulfonyl-1,3-phenylrest steht und
- n gleich 1, 2, 3 oder 4 ist,
wobei der Molprozentanteil der Einheiten der Formel (O-CH₂-CH₂-)ₙ mit n gleich 1, bezogen auf die Gesamtheit der Einheiten der Formel (O-CH₂-CH₂-)ₙ mit n gleich 1, 2, 3 und 4, etwa 10 bis 80 und vorzugsweise etwa 20 bis 60 beträgt.

21. System (S) oder (DS) nach einem der Ansprüche 17 bis 20, **dadurch gekennzeichnet, daß** der sulfonierte Copolyester außerdem
- gleiche oder verschiedene, aromatische, aliphatische oder cycloaliphatische N,N-Dicarbamyleinheiten (DCAE) der Formel
-C(O)-NH-E-NH-C(O)-
worin das Symbol E für eine aromatische, aliphatische oder cycloaliphatische Kohlenwasserstoffgruppe steht,
- Polyalkylenoxygruppierungen (PAOG) mit 5 bis 150 Alkylenoxyeinheiten mit 2 bis 4 Kohlenstoffatomen im Alkylrest
- und Verknüpfungsgruppen (L') der Formel
-C(O)-NH- und/oder -NH-C(O)-O-,
die durch Umsetzung des sulfonierten anionischen Copolyesters mit einem Polyoxyalkylendiisocyanat, das -NCO-Endgruppen und einen Polyoxyalkylenrest mit einer Molmasse von 300 bis 6000 und vorzugsweise von 600 bis 4000 aufweist, bei einem Verhältnis der Zahl der -NCO-Funktionen zur Gesamtheit der OH-Funktionen oder OH-Äquivalente des eingesetzten sulfonierten anionischen Copolyesters von 0,5 bis 1 und vorzugsweise von 0,8 bis 1 erhältlich sind,
enthält.

22. System (S) oder (DS) nach einem der Ansprüche 1 bis 21, **dadurch gekennzeichnet, daß** es außerdem mindestens ein Additiv enthält, welches zur Verbesserung der Stabilität des Wirkstoffs, der mechanischen Eigenschaften, der Optik des Systems oder der Fließfähigkeit des Systems befähigt ist.

23. System (S) oder (DS) nach einem der Ansprüche 1 bis 22, **dadurch gekennzeichnet, daß** es mittels einer Emulgier-, Prill- oder Direktfällungstechnik hergestellt werden kann.

24. Verfahren zur Herstellung des Wirkstoffträgersystems gemäß einem der Ansprüche 1 bis 23, **dadurch gekennzeichnet, daß** man den Wirkstoff bzw. die Wirkstoffe in eine wäßrige Dispersion, die mindestens ein wasserlösliches und/oder wasserdispergierbares anionisches Polymer (K) enthält, einträgt, welche geformt wird, und das anionische Polymer unlöslich macht, indem man es mit einem Metallkation zusammenbringt, was dazu führt, daß die Teilchen der polymeren Matrix den Wirkstoff bzw. die Wirkstoffe einschließen.

25. Verfahren nach Anspruch 24, **dadurch gekennzeichnet, daß** man eine Emulsion und/oder Dispersion des Wirkstoffs bzw. der Wirkstoffe in einer Lösung und/oder Dispersion des anionischen Polymers in Wasser herstellt.

26. Verfahren nach Anspruch 24 oder 25, **dadurch gekennzeichnet, daß** man eine wäßrige Lösung und/oder Dispersion eines anionischen Polymers mit einer Polymerkonzentration von 5 bis 50 Gew.-% und vorzugsweise 10 bis 30 Gew.-% herstellt.

27. Verfahren nach einem der Ansprüche 24 bis 26, **dadurch gekennzeichnet, daß** man einen nichtionischen oder anionischen Emulgator zusetzt.

28. Verfahren nach Anspruch 27, **dadurch gekennzeichnet, daß** man den nichtionischen Emulgator unter:
- ethoxylierten oder ethoxylierten/propoxylierten Fettalkoholen,
- ethoxylierten oder ethoxylierten/propoxylierten Triglyceriden,
- ethoxylierten oder ethoxylierten/propoxylierten Fettsäuren,
- ethoxylierten oder ethoxylierten/propoxylierten Sorbitanestern,
- ethoxylierten oder ethoxylierten/propoxylierten Fettaminen,
- ethoxylierten oder ethoxylierten/propoxylierten Di(1-phenylethyl)phenolen,
- ethoxylierten oder ethoxylierten/propoxylierten Tri(1-phenylethyl)phenolen und
- ethoxylierten oder ethoxylierten/propoxylierten Alkylphenolen
und den anionischen Emulgator unter:
- Fettsäuresalzen,
- Alkalimetallalkylsulfaten, -alkylsulfonaten, - alkylsulfosuccinaten, -alkylsuccinamaten oder - alkylphosphaten,
- Natriumdodecyldiphenyletherdisulfonat,
- Alkylphenolpolyglykolethersulfonaten,
- Alkylsulfopolycarbonsäureestersalzen,
- Produkten der Kondensation von Fettsäuren mit Oxy- und Aminoalkansulfonsäuren,
- sulfatierten Derivaten von Polyglykolethern,
- sulfatierten Estern von Fettsäuren und Polyglykolen und
- Alkanolamiden sulfatierter Fettsäuren
auswählt.

29. Verfahren nach einem der Ansprüche 24 bis 28, **dadurch gekennzeichnet, daß** man den Wirkstoff bzw. die Wirkstoffe (WS), den Emulgator (EM) und das anionische Polymer (K) in solchen relativen Mengen einsetzt, daß die Emulsion auf trockener Basis:
- 0,5 bis 80 Gew.-% und vorzugsweise 10 bis 60 Gew.-% Wirkstoff(e) (WS),
- 20 bis 95 Gew.-% und vorzugsweise 40 bis 90 Gew.-% anionisches Polymer (K) und
- 0 bis 20 Gew.-% und vorzugsweise 0,1 bis 10 Gew.-% Emulgator (EM)
enthält.

30. Verfahren nach einem der Ansprüche 24 bis 29, **dadurch gekennzeichnet, daß** der Trockenstoffgehalt der erhaltenen Emulsion und/oder Dispersion im allgemeinen zwischen 10 und 60 Gew.-% und vorzugsweise zwischen 20 und 50 Gew.-% liegt.

31. Verfahren nach einem der Ansprüche 24 bis 30, **dadurch gekennzeichnet, daß** man den oder die Wirkstoffe in flüssiger oder fester Form in die Lösung und/oder Dispersion von anionischem Polymer gibt.

32. Verfahren nach Anspruch 31, **dadurch gekennzeichnet, daß** die mittlere Teilchengröße der Emulsion und/oder Dispersion zwischen 1 und 500 µm und vorzugsweise zwischen 100 und 400 µm für eine Wasch- und Reinigungsmittelanwendung und zwischen 1 und 20 µm für eine Pflanzenschutzanwendung liegt.

33. Verfahren nach einem der Ansprüche 24 bis 32, **dadurch gekennzeichnet, daß** man dabei ein nichtreaktives Metallsalz verwendet, welches in Gegenwart des anionischen Polymers unlöslich ist und dessen Kation durch Zusatz eines Reagenzes (RE), welches es in Lösung bringen kann, nach der Fragmentierungsphase freigesetzt werden kann.

34. Verfahren nach Anspruch 33, **dadurch gekennzeichnet, daß** es sich bei dem unlöslichen Salz um ein Carbonat, vorzugsweise Calcium- oder Magnesiumcarbonat, handelt.

35. Verfahren nach Anspruch 34, bei dem es sich bei dem Reagenz (RE) um eine Säure, vorzugsweise Essigsäure, handelt.

36. Verfahren nach einem der Ansprüche 24 bis 35, **dadurch gekennzeichnet, daß** man eine Dispersion des vorher erhaltenen Systems aus Wirkstoff(en) und Polymerdispersion in einer hydrophoben Flüssigkeit herstellt und dann das Polymer durch Zusatz eines Metallkations ausfällt, wobei man Wirkstoffteilchen erhält, die abgetrennt und gegebenenfalls getrocknet werden.

37. Verfahren nach Anspruch 36, **dadurch gekennzeichnet, daß** es sich bei der hydrophoben Flüssigkeit um ein pflanzliches, tierisches oder synthetisches Öl, vorzugsweise Silikonöle und weiter bevorzugt Polydimethylsiloxanöle, Polyphenylmethylsiloxanöle oder Octamethylcyclotetrasiloxan, oder Paraffinöle handelt.

38. Verfahren nach Anspruch 36 oder 37, **dadurch gekennzeichnet, daß** die relativen Mengen des Polymers (K), der nicht mischbaren Flüssigkeit (ML) und gegebenenfalls eines wie oben erwähnten Emulgators sich auf:
- mehr als 50 Vol.-% und vorzugsweise 60 bis 80 Vol.-% einer nicht mischbaren Flüssigkeit (ML),
- höchstens 50 Vol.-% und vorzugsweise 20 bis 40 Vol.-% des Systems aus Wirkstoff(en) und Polymerdispersion (K) und
- 0 bis 20 Gew.-%, vorzugsweise 0,1 bis 10 Gew.-%, Emulgator (EM)
belaufen.

39. Verfahren nach einem der Ansprüche 36 bis 38, **dadurch gekennzeichnet, daß** man eine das System aus Wirkstoff(en) und Polymerdispersion enthaltende Ölphase herstellt, die im Fall eines flüssigen Wirkstoffs in Form einer Doppelemulsion und im Fall eines festen Wirkstoffs in Form einer Emulsion mit einem Feststoff als dispergierter Phase vorliegt.

40. Verfahren nach einem der Ansprüche 24 bis 39, **dadurch gekennzeichnet, daß** man ein Additiv zusetzt, welches zur Verbesserung der Stabilität des Wirkstoffs, der mechanischen Eigenschaften, der Optik des Systems oder der Fließfähigkeit des Systems befähigt ist.

41. Verfahren nach einem der Ansprüche 24 bis 40, **dadurch gekennzeichnet, daß** man das Polymer unlöslich macht, indem man der erhaltenen Emulsion ein Metallkation oder ein Reagenz (RE), das das im ersten Schritt eingetragene Metallkation freisetzt, zugibt.

42. Verfahren nach Anspruch 41, **dadurch gekennzeichnet, daß** das Metallkation so beschaffen ist, daß das Polymer ausgefällt wird und es in Wasser in einem pH-Bereich um den Neutralpunkt löslich ist.

43. Verfahren nach Anspruch 41 oder 42, **dadurch gekennzeichnet, daß** das Kation eine Wertigkeit größer gleich 2 hat.

44. Verfahren nach einem der Ansprüche 41 bis 43, **dadurch gekennzeichnet, daß** es sich bei dem Metallkation um ein zweiwertiges Kation aus der Gruppe II A des Periodensystems, vorzugsweise ein Erdalkalimetall wie Beryllium, Magnesium, Calcium oder Barium; aus der Gruppe I B, vorzugsweise Kupfer; aus der Gruppe II B, vorzugsweise Zink, oder ein dreiwertiges Kation, vorzugsweise ein Kation eines unter den Lanthaniden mit einer Ordnungszahl von 57 bis 71 und Yttrium sowie Scandium ausgewählten Seltenerdmetalls; ein Kation aus der Gruppe III B, insbesondere Aluminium und Gallium, und aus der Gruppe VIII, vorzugsweise Eisen, handelt.

45. Verfahren nach einem der Ansprüche 41 bis 43, **dadurch gekennzeichnet, daß** das Metallkation durch Calciumchlorid eingebracht wird.

46. Verfahren nach einem der Ansprüche 41 bis 45, **dadurch gekennzeichnet, daß** man die einzusetzende Metallkationmenge so wählt, daß sie im Verhältnis zur Zahl der anionischen Funktionen im Überschuß, vorzugsweise in einem Überschuß von 100 bis 200%, vorliegt.

47. Verfahren nach einem der Ansprüche 41 bis 46, **dadurch gekennzeichnet, daß** das Kation in Form einer wäßrigen Lösung mit einer Konzentration zwischen 0,5 und 5 mol/l, vorzugsweise zwischen 1 und 2 mol/l, eingebracht wird.

48. Verfahren nach einem der Ansprüche 41 bis 47, **dadurch gekennzeichnet, daß** man das das Metallkation in löslicher Form freisetzende Reagenz (RE), beispielsweise eine anorganische oder organische Säure, vorzugsweise Essigsäure, in einer mindestens der Stöchiometrie entsprechenden und vorzugsweise um 10 bis 20% darüber liegenden Menge zusetzt.

49. Verfahren nach einem der Ansprüche 41 bis 48, **dadurch gekennzeichnet, daß** man die festen Teilchen aus einem Dreiphasensystem durch Verdünnung oder Zusatz einer Lösung mit hoher Ionenkonzentration gewinnt und dann die Teilchen abtrennt.

50. Verfahren nach einem der Ansprüche 41 bis 49, **dadurch gekennzeichnet, daß** man die so formulierte Emulsion zwecks Erhalt der den Wirkstoff enthaltenden Teilchen durch Lyophilisierung oder Zerstäubung trocknet.

51. Verfahren nach einem der Ansprüche 24 bis 35, **dadurch gekennzeichnet, daß** man die den Wirkstoff enthaltende Polymerdispersion und/oder -suspension zu Tröpfchen fragmentiert und die erhaltenen Tröpfchen verfestigt, indem man sie so mit einem Metallkation zusammenbringt, daß sie sich zu Teilchen verfestigen, die dann gewonnen werden.

52. Verfahren nach Anspruch 51, **dadurch gekennzeichnet, daß** man die Polymermasse fragmentiert, indem man die den Wirkstoff enthaltende Polymerdispersion und/oder -suspension zur Bildung von Tröpfchen durch eine Düse führt, die Tröpfchen verfestigt, indem man sie mit einem Metallkation in Berührung bringt, und dann die erhaltenen Teilchen gewinnt.

53. Verfahren nach Anspruch 51 oder 52, **dadurch gekennzeichnet, daß** man die "Verfestigung" der Tröpfchen zu Teilchen dadurch gewährleistet, daß man sie mit einer Lösung eines Metallkations gemäß obiger Definition in einem der Ansprüche 41 bis 47 in Berührung bringt.

54. Verfahren nach einem der Ansprüche 51 bis 53, **dadurch gekennzeichnet, daß** man die Teilchen gemäß Anspruch 50 oder in einer Wirbelschicht trocknet.

55. Verfahren zur Herstellung des Systems (S) oder (DS) nach einem der Ansprüche 24 bis 35, **dadurch gekennzeichnet, daß** die Polymermatrix mindestens ein sulfoniertes Copolyesteroligomer (K) mit einer gewichtsmittleren Molmasse von höchstens 20.000, vorzugsweise weniger als 15.000 und insbesondere zwischen 4000 und 10.000 und/oder einen sulfonierten Copolyester (K) mit einer gewichtsmittleren Molmasse von mehr als 20.000, vorzugsweise bis 60.000, enthält und man das Polymer unlöslich macht, indem man dem System aus Wirkstoff(en) und wäßriger Dispersion von sulfoniertem anionischem Copolyesteroligomer und/oder sulfoniertem Copolyester ein Metallkation zugibt.

56. Verfahren nach Anspruch 55, **dadurch gekennzeichnet, daß** man Mischungen von sulfoniertem Copolyesteroligomer und sulfoniertem Copolyester mit mindestens 60% eines sulfonierten Copolyesteroligomers, vorzugsweise mindestens 80%, einsetzt.

57. Verfahren nach Anspruch 55 oder 56, **dadurch gekennzeichnet, daß** man bei der Herstellung des Systems aus Wirkstoff(en) und wäßriger Dispersion eines Copolyesteroligomers und/oder eines Copolyesters ein Metallkation in unlöslicher Form zusetzt und das erhaltene System danach mit einem das Metallkation freisetzenden Reagenz (RE) versetzt.

58. Verfahren nach einem der Ansprüche 55 bis 57, **dadurch gekennzeichnet, daß** man ein Metallkation in löslicher Form oder in unlöslicher Form in Verbindung mit einem Reagenz (RE) gemäß obiger Definition in einem der Ansprüche 41 bis 48 verwendet.

59. Verfahren nach einem der Ansprüche 55 bis 58, **dadurch gekennzeichnet, daß** man die Teilchen gemäß Anspruch 50 oder in einer Wirbelschicht trocknet.

60. Verwendung des Systems (DS) gemäß den Ansprüchen 3 und 5 bis 26 als Duftadditiv in Wasch- und Reinigungsmittelzusammensetzungen, insbesondere zum Wäschewaschen.

61. Wasch- und Reinigungsmittelzusammensetzungen, insbesondere zum Wäschewaschen, enthaltend mindestens ein System (DS) gemäß einem der Ansprüche 3 und 5 bis 26.

62. Verwendung des Systems (S) gemäß einem der Ansprüche 2 und 4 bsi 26 als Verkapselungsmittel für einen oder mehrere Pflanzenschutzwirkstoffe in Pflanzenschutzzusammensetzungen, insbesondere für agrochemische Behandlungen.

63. Agrochemische Zusammensetzungen, enthaltend einen oder mehrere aggrochemische Wirkstoffe, die in mindestens einem multipartikulären System gemäß einem der Ansprüche 2 und 4 bis 26 eingeschlossen sind.

64. Agrochemische Zusammensetzungen nach Anspruch 63, in denen es sich bei dem Wirkstoff um Fenamidon handelt.

65. Agrochemische Zusammensetzungen nach Anspruch 63, in denen es sich bei dem Wirkstoff um Isoxaflutol handelt.

66. Agrochemische Zusammensetzungen nach Anspruch 63, enthaltend mindestens zwei Wirkstoffe.

67. Agrochemische Zusammensetzungen nach Anspruch 66, in denen mindestens zwei der Wirkstoffe unverträglich sind.

68. Agrochemische Zusammensetzungen nach einem der Ansprüche 63 bis 67, in denen mindestens ein Wirkstoff zumindest teilweise in freier Form vorliegt.

69. Verfahren zur Behandlung von Pflanzen oder Pflanzenfortpflanzungsprodukten mit Hilfe einer agrochemischen Formulierung, die mindestens ein multipartikuläres System gemäß einem der Ansprüche 2 und 4 bis 26 enthält.

## Claims

1. Multiparticulate carrier system (S) for active material(s) comprising at least one active material enclosed in a hydrophilic organic matrix (OM) comprising at least one water-soluble and/or water-dispersible anionic polymer (K) rendered insoluble by a metal cation, **characterized in that** the said water-soluble and/or water-dispersible anionic polymer (K) is chosen from water-soluble or water-dispersible sulphonated anionic copolyesters which are capable of being obtained by esterification and/or transesterification and polycondensation of a monomer (M) composition comprising:
- at least one nonsulphonated dicarboxylic monomer (DCM), the said monomer being aromatic, aliphatic or cycloaliphatic, devoid of a sulpho functional group and exhibiting two reactive carboxyl functional groups,
- at least one sulphonated monomer (SM) which is polyfunctional (SPFM) and/or monofunctional (SMFM), the said monomer being aromatic, aliphatic or cycloaliphatic and exhibiting at least one sulpho functional group bonded directly or indirectly to a carbon atom of an aromatic, aliphatic or cycloaliphatic residue and two alike or different reactive functional groups chosen from the carboxyl and hydroxyl functional groups or one reactive functional group chosen from the carboxyl and hydroxyl functional groups,
- at least one nonsulphonated polyfunctional monomer (PFM), the said monomer being aromatic, aliphatic or cycloaliphatic, devoid of a sulpho functional group and exhibiting at least two hydroxyl functional groups,
- optionally at least one nonsulphonated polyfunctional monocarboxylic monomer (MCM), the said monomer being aromatic, aliphatic or cycloaliphatic, devoid of a sulpho functional group and exhibiting a reactive carboxyl functional group and a reactive hydroxyl functional group,
- and optionally at least one nonsulphonated monofunctional monomer (MFM) exhibiting a carboxyl or hydroxyl reactive functional group.

2. System (S) according to Claim 1, **characterized in that** the active material(s) belong to the field of detergency, food or agrochemistry.

3. System (PS) according to Claim 1, **characterized in that** the active material is a fragrance or the active materials are a mixture of fragrances in the solid or liquid form.

4. System (S) according to Claim 1, **characterized in that** the active material or materials are plant-protection active materials chosen from fungicides, herbicides, insecticides and plant growth regulators in the solid or liquid form.

5. System (S) or (PS) according to one of Claims 1 to 4, **characterized in that** the active material is in the liquid form.

6. System (S) or (PS) according to one of Claims 1 to 4, **characterized in that** the active material is solid as such or is liquid supported by a support material in the multiparticulate form.

7. System (S) or (PS) according to Claim 6, **characterized in that** the the said support material is an adsorbent and/or absorbent material, preferably an inorganic material, which is inert or essentially inert with respect to the polymer matrix.

8. System (S) or (PS) according to Claim 7, **characterized in that** the said support material is a silica, a clay or a zeolite.

9. System (S) or (PS) according to one of Claims 1 to 8, **characterized in that** it comprises, in the case of an active material in the liquid form:
- from 5 to 60% by weight of active material(s), preferably from 15 to 40%,
- from 40 to 95% by weight of polymer matrix, preferably from 60 to 85%.

10. System (S) or (PS) according to one of Claims 1 to 9, **characterized in that** it comprises, in the case of an active material in the solid form:
- from 0.5 to 80% by weight of active material(s), preferably from 10 to 60%,
- from 20 to 99.5% by weight of polymer matrix, preferably from 40 to 90%.

11. System (S) or (PS) according to one of Claims 1 to 10, **characterized in that** the said system is in the multiparticulate form, exhibiting a particle size which varies between 0.2 and 500 µm approximately, preferably between 0.2 and 100 µm and very particularly between 0.3 and 10 µm.

12. System (S) or (PS) according to one of Claims 1 to 10, **characterized in that** the said system is in the multiparticulate form, exhibiting a size for the particles obtained which varies between 100 and 1 000 µm, preferably between 200 µm and 500 µm.

13. System (S) or (PS) according to one of Claims 1 to 12, **characterized in that** the copolymer (K) is rendered insoluble by a metal cation having a valency equal to or greater than 2, preferably a divalent cation from Group IIA, IB or IIB of the Periodic Table or a trivalent cation, preferably a rare earth metal cation or a cation from Group IIIB or Group VIII.

14. System (S) or (PS) according to Claim 13, **characterized in that** the metal cation is an alkaline earth metal cation, preferably calcium.

15. System (S) or (PS) according to any one of Claims 1 to 14, **characterized in that** the sulphonated anionic copolyester (K) comprises a level of sulphonated units corresponding to a content by weight of sulphur of 0.5 to 8%, preferably 1.2 to 6%, with respect to the copolymer (K).

16. System (S) or (PS) according to any one of Claims 1 to 15, **characterized in that** the monomer (M) composition from which the sulphonated anionic copolyester (K) derives comprises:
- a level of sulphonated monomer (SM) such that the level of sulphur present in the said monomer (M) composition and originating from the said monomer (SM) represents from 0.1 to 7%, preferably from 0.5 to 5%, of the weight of the said monomer composition,
- relative amounts of (DCM), (SM), (PFM), (MCM) and (MFM) monomers such that the ratio of total number of COOH functional groups or COOH equivalents to the total number of OH functional groups is from 0.8 to 4.

17. System (S) or (PS) according to Claim 16, **characterized in that** the monomer (M) composition comprises at least one nonsulphonated monomer (DCM), at least one sulphonated dicarboxylic acid, hydroxy acid or diol monomer (SPFM) and/or carboxylic acid or hydroxyl monomer (SMFM), at least one nonsulphonated polyol monomer (PFM), optionally at least one nonsulphonated hydroxy acid monomer (MCM) and optionally at least one monofunctional hydroxyl monomer (MFM).

18. System (S) or (PS) according to Claim 17, **characterized in that** the sulphonated copolyester is capable of being obtained by esterification and/or transesterification and polycondensation of a monomer composition based:
- on at least one nonsulphonated diacid monomer (DCM) chosen from terephthalic, isophthalic and 2,6-naphthalenedicarboxylic acids or anhydrides, or their diesters, in an amount corresponding to a (DCM) / (DCM) + (SM) molar ratio from 95/100 to 60/100, preferably from 93/100 to 65/100,
- on at least one sulphonated diacid monomer (SM) chosen from sulphoisophthalic and sulphosuccinic acids or anhydrides, and their diesters, in an amount corresponding to an (SM)/(DCM)+(SM) molar ratio from 5/100 to 40/100, preferably from 7/100 to 35/100,
- and on at least one polyol monomer (PFM) chosen from ethylene glycol, propylene glycol, diethylene glycol, dipropylene glycol, glycerol, 1,2,4-butanetriol and 1,2,3-butanetriol, according to an amount corresponding to a ratio of number of OH functional groups of the polyol monomer (PFM)/number of COOH functional groups or functional group equivalents of the diacid monomers (DCMs)+(SMs) from 1.05 to 4, preferably from 1.1 to 3.5 and very particularly from 1.8 to 3,
the said sulphonated copolyester exhibiting a content by weight of sulphur from 0.5 to 8%, preferably from 1.2 to 6%.

19. System (S) or (PS) according to Claim 18, **characterized in that**:
- the nonsulphonated diacid monomer (DCM) comprises from 50 to 100 mol%, preferably from 70 to 99 mol%, of dimethyl terephthalate and from 0 to 50 mol%, preferably from 1 to 30 mol%, of isophthalic acid,
- the sulphonated diacid monomer (SM) is dimethyl 5-(sodiooxysulphonyl)isophthalate,
- the polyol monomer (PFM) is monoethylene glycol.

20. System (S) or (PS) according to either of Claims 18 and 19, **characterized in that** the sulphonated copolyester has for general formula:
[-O-C(O)-Ar-C(O)-(O-CH₂-CH₂-)ₙ-]ₘ
where
- the symbol Ar represents a 1,4-phenylene, 1,3-phenylene or 5-sodiooxysulphonyl-1,3-phenylene residue,
- n is equal to 1, 2, 3 or 4,
the molar percentage of the units of formula (O-CH₂-CH₂-)ₙ where n is equal to 1, with respect to the combined units of formula (O-CH₂-CH₂-)ₙ where n is equal to 1, 2, 3 and 4, being of the order of 10 to 80, preferably of the order of 20 to 60.

21. System (S) or (PS) according to any one of Claims 17 to 20, **characterized in that** the said sulphonated copolyester additionally comprises:
- alike or different, aromatic, aliphatic or cycloaliphatic N,N'-dicarbamyl units (DCAus) of formula:
-C(O)-NH-E-NH-C(O)-
where
the symbol E represents an aromatic, aliphatic or cycloaliphatic hydrocarbonaceous group,
- polyalkyleneoxy units (PAOus) exhibiting from 5 to 150 alkyleneoxy units, the alkylene radical of which comprises from 2 to 4 carbon atoms,
- and bonding groups (L') of formula -C(O)-NH- and/or -NH-C(O)-O-, which are capable of being obtained by reaction of the said sulphonated anionic copolyester with a polyoxyalkylene diisocyanate exhibiting -NCO end groups, the polyoxyalkylene residue of which exhibits a molecular mass from 300 to 6 000, preferably from 600 to 4 000, the ratio of the number of -NCO functional groups to the combined OH functional groups or OH equivalents of the sulphonated anionic copolyester employed being from 0.5 to 1, preferably from 0.8 to 1.

22. System (S) or (PS) according to one of Claims 1 to 21, **characterized in that** the said system additionally comprises at least one additive capable of improving the stability of the active material, the mechanical properties, the appearance of the said system or the flowability of the latter.

23. System (S) or (PS) according to one of Claims 1 to 22, **characterized in that** it is capable of being obtained by an emulsification, prilling or direct precipitation technique.

24. Process for producing the said carrier system for active material(s) described in one of Claims 1 to 23, **characterized in that** it consists in introducing the active material or materials into an aqueous dispersion comprising at least one water-soluble and/or water-dispersible anionic polymer (K) which is formed and in rendering the anionic polymer insoluble by bringing into the presence of a metal cation, resulting in particles of polymer matrix enclosing the active material or materials.

25. Process according to Claim 24, **characterized in that** an emulsion and/or dispersion of active material(s) in a solution and/or dispersion of the anionic polymer in water is prepared.

26. Process according to either of Claims 24 and 25, **characterized in that** an aqueous solution and/or dispersion of an anionic polymer is prepared having a concentration of polymer of 5 to 50% by weight, preferably of 10 to 30%.

27. Process according to one of Claims 24 to 26, **characterized in that** a nonionic or anionic emulsifier is added.

28. Process according to Claim 27, **characterized in that** the nonionic emulsifier is chosen from:
- ethoxylated or ethoxy-propoxylated fatty alcohols,
- ethoxylated or ethoxy-propoxylated triglycerides,
- ethoxylated or ethoxy-propoxylated fatty acids,
- ethoxylated or ethoxy-propoxylated sorbitan esters,
- ethoxylated or ethoxy-propoxylated fatty amines,
- ethoxylated or ethoxy-propoxylated did-phenylethyl)phenols,
- ethoxylated or ethoxy-propoxylated tri(1-phenylethyl)phenols,
- ethoxylated or ethoxy-propoxylated alkylphenols, and the anionic emulsifier is chosen from:
- salts of fatty acids,
- alkaline alkyl sulphates, alkylsulphonates, alkyl sulphosuccinates or succinamates, or alkyl phosphates,
- sodium dodecyldiphenyl ether disulphonate,
- sulphonates of alkylphenolpolyglycolic ethers,
- salts of esters of alkylsulphopolycarboxylic acids,
- the condensation products of fatty acids with oxy- and aminoalkanesulphonic acids,
- sulphated derivatives of polyglycolic ethers,
- sulphated esters of fatty acids and of polyglycols,
- sulphated fatty acid alkanolamides.

29. Process according to one of Claims 24 to 28, **characterized in that** the relative amounts of active material(s) (AM), of emulsifying agent (EA) and of anionic polymer (K) employed are such that the said emulsion, expressed on a dry basis, comprises:
- from 0.5 to 80%, preferably from 10 to 60%, of their weight of active material(s) (AM),
- from 20 to 95%, preferably from 40 to 90%, of their weight of anionic polymer (K),
- from 0 to 20%, preferably from 0.1 to 10%, of their weight of emulsifying agent (EA).

30. Process according to one of Claims 24 to 29, **characterized in that** the amount of dry matter of the emulsion and/or dispersion obtained is generally between 10 and 60% by weight and preferably between 20 and 50% by weight.

31. Process according to one of Claims 24 to 30, **characterized in that** the active material or materials is/are added in the liquid or solid form to the solution and/or dispersion of anionic polymer.

32. Process according to Claim 31, **characterized in that** the mean particle size of the emulsion and/or dispersion is between 1 and 500 µm and preferably between 100 and 400 µm for a detergency application and 1 and 20 µm for a plant-protection application.

33. Process according to one of Claims 24 to 32, **characterized in that** use is made, during this operation, of an unreactive metal salt which is a metal salt which is insoluble in the presence of the anionic polymer and which will be capable of releasing its cation by addition of a reactant (RE), after the fragmentation phase, capable of dissolving it.

34. Process according to Claim 33, **characterized in that** the insoluble salt is a carbonate, preferably calcium carbonate or magnesium carbonate.

35. Process according to Claim 34, **characterized in that** the reactant (RE) is an acid, preferably acetic acid.

36. Process according to one of Claims 24 to 35, **characterized in that** a dispersion in a hydrophobic liquid of the active material(s)/polymeric dispersion system obtained above is prepared and then the polymer is precipitated by addition of a metal cation in order to obtain particles of active material(s), which are separated and optionally dried.

37. Process according to Claim 36, **characterized in that** the hydrophobic liquid is a vegetable, animal or synthetic oil, preferably silicone oils, and more preferably polydimethylsiloxane oils, polyphenylmethylsiloxane oils or octamethylcyclotetra-siloxane, or paraffin oils.

38. Process according to either of Claims 36 and 37, **characterized in that** the relative amounts of polymer (K), of immiscible liquid (ML) and optionally of an emulsifier as mentioned above are as follows:
- more than 50%, preferably from 60 to 80%, by volume of an immiscible liquid (ML),
- at most 50%, preferably from 20 to 40%, by volume of the active material(s)/polymeric dispersion (K) system,
- from 0 to 20%, preferably from 0.1 to 10%, of their weight of emulsifying agent (EA).

39. Process according to one of Claims 36 to 38, **characterized in that** an oily phase is formed comprising the active material(s)/polymeric dispersion system which exists in the form of a double emulsion, in the case of a liquid active material, and in the form of an emulsion, the dispersed phase of which is a solid, in the case of a solid active material.

40. Process according to one of Claims 24 to 39, **characterized in that** an additive capable of improving the stability of the active material, the mechanical properties, the appearance of the said system or the flowability of the latter is added.

41. Process according to one of Claims 24 to 40, **characterized in that** the polymer is rendered insoluble by addition, to the emulsion obtained, of a metal cation or of a reactant (RE) which releases the metal cation introduced in the first stage.

42. Process according to Claim 41, **characterized in that** the metal cation is such that precipitation of the polymer is obtained and such that it is soluble in water in a pH region close to neutrality.

43. Process according to either of Claims 41 and 42, **characterized in that** the cation has a valency equal to or greater than 2.

44. Process according to one of Claims 41 to 43, **characterized in that** the metal cation is a divalent cation from Group IIA of the Periodic Table, preferably an alkaline earth metal, such as beryllium, magnesium, calcium or barium; from Group IB, preferably copper; or from Group IIB, preferably zinc, or a trivalent cation, preferably a cation of a rare earth metal chosen from lanthanides having an atomic number of 57 to 71 and yttrium, as well as scandium; or a cation from Group IIIB, in particular aluminum and gallium, and from Group VIII, preferably iron.

45. Process according to one of Claims 41 to 43, **characterized in that** the metal cation is introduced by calcium chloride.

46. Process according to one of Claims 41 to 45, **characterized in that** the amount of metal cation to be employed is chosen so that it is in excess with respect to the number of anionic functional groups, preferably in an excess of 100 to 200%.

47. Process according to one of Claims 41 to 46, **characterized in that** the cation is introduced in the form of an aqueous solution, the concentration of which lies between 0.5 and 5 mol/l, preferably between 1 and 2 mol/l.

48. Process according to one of Claims 41 to 47, **characterized in that** the agent which releases the metal cation in the soluble form (RE), for example an inorganic or organic acid, preferably acetic acid, is added in an amount at least equal to stoichiometry, preferably greater by 10 to 20%.

49. Process according to one of Claims 41 to 48, **characterized in that** the solid particles are recovered from a three-phase system by dilution or addition of a solution with a high ionic concentration, followed by separation of the particles.

50. Process according to one of Claims 41 to 49, **characterized in that** a drying operation is carried out, by lyophilization or by atomization, on the emulsion thus formulated in order to obtain particles comprising the active material.

51. Process according to one of Claims 24 to 35, **characterized in that** the polymer dispersion and/or suspension comprising the active material is fragmented into droplets and the droplets obtained are solidified by bringing into the presence of a metal cation, so that they solidify into particles which are subsequently recovered.

52. Process according to Claim 51, **characterized in that** the polymer mass is fragmented by passing the polymer dispersion and/or suspension comprising the active material through a nozzle so as to form droplets, the latter are solidified by bringing them into contact with a metal cation and then the particles obtained are recovered.

53. Process according to either of Claims 51 and 52, **characterized in that** the "solidification" of the droplets into particles is provided by bringing them into contact with a solution of a metal cation as defined above in one of Claims 41 to 47.

54. Process according to one of Claims 51 to 53, **characterized in that** the particles are dried according to Claim 50 or on a fluidized bed.

55. Process for the preparation of the system (S) or (PS) according to any one of Claims 24 to 35, **characterized in that** the polymer matrix comprises at least one sulphonated copolyester oligomer (K) having a weight-average molecular mass of at most 20 000, preferably of less than 15 000 and more particularly of between 4000 and 10 000 and/or one sulphonated copolyester (K) having a weight-average molecular mass of greater than 20 000, preferably of up to 60 000, and **in that** the polymer is rendered insoluble by addition of a metal cation to the active material(s)/aqueous dispersion of sulphonated anionic copolyester oligomer and/or sulphonated copolyester system.

56. Process according to Claim 55, **characterized in that** use is made of blends of sulphonated copolyester oligomer and of sulphonated copolyester comprising at least 60% of a sulphonated copolyester oligomer, preferably at least 80%.

57. Process according to either of Claims 55 and 56, **characterized in that**, during the preparation of the active material(s)/aqueous dispersion of a copolyester oligomer and/or of a copolyester system, a metal cation in insoluble form is added and then, successively, a reactant (RE) which releases the metal cation is added to the said system obtained.

58. Process according to one of Claims 55 to 57, **characterized in that** use is made of a metal cation in the soluble form or in the insoluble form in combination with a reactant (RE) as defined above in one of Claims 41 to 48.

59. Process according to one of Claims 55 to 58, **characterized in that** the particles are dried according to Claim 50 or on a fluidized bed.

60. Use of the system (PS) forming the subject-matter of one of Claims 3 and 5 to 26 as scenting additive in detergent compositions, in particular for the washing of the laundry.

61. Detergent compositions, in particular for the washing of the laundry, comprising at least one system (PS) forming the subject-matter of one of Claims 3 and 5 to 26.

62. Use of the system (S) forming the subject-matter of one of Claims 2 and 4 to 26 as agent for the encapsulation of one or more plant-protection active materials in plant-protection compositions, in particular for agrochemical treatments.

63. Agrochemical compositions comprising one or more agrochemical active materials enclosed in at least one multiparticulate system defined in one of Claims 2 and 4 to 26.

64. Agrochemical compositions according to Claim 63, in which the active material is fenamidone.

65. Agrochemical compositions according to Claim 63, in which the active material is isoxaflutole.

66. Agrochemical compositions according to Claim 63, comprising at least two active materials.

67. Agrochemical compositions according to Claim 66, in which two active materials at least are incompatible.

68. Agrochemical compositions according to one of Claims 63 to 67, in which at least one active material is partially or completely in the free form.

69. Process for the treatment of plants or plant propagation materials using an agrochemical formulation comprising at least one multiparticulate system according to one of Claims 2 and 4 to 26.
